**Europäisches Patentamt**

**European Patent Office**

**Office européen des brevets**

(19)

(11) Veröffentlichungsnummer : **0 253 075**
**B1**

(12)

# EUROPÄISCHE PATENTSCHRIFT

(45) Veröffentlichungstag der Patentschrift :
07.03.90

(51) Int. Cl.⁵ : **F 02 B 37/00**

(21) Anmeldenummer : **87105927.5**

(22) Anmeldetag : **23.04.87**

(54) **Mehrzylinder-Brennkraftmaschine mit zwei Abgasturboladern.**

(30) Priorität : **12.07.86 DE 3623540**

(43) Veröffentlichungstag der Anmeldung :
**20.01.88 Patentblatt 88/03**

(45) Bekanntmachung des Hinweises auf die Patenterteilung : **07.03.90 Patentblatt 90/10**

(84) Benannte Vertragsstaaten :
**DE ES FR GB IT NL SE**

(56) Entgegenhaltungen :
EP--A-- 0 046 872
EP--A-- 0 166 869
EP--A-- 0 178 485
WO--A--83 /005 32
DE--A-- 3 531 744
FR--A-- 2 540 180

(73) Patentinhaber : **Dr.Ing.h.c. F. Porsche Aktiengesellschaft**
**Porschestrasse 42**
**D-7000 Stuttgart 40 (DE)**

(72) Erfinder : **Eger, Ulrich**
**Schulberg 3**
**D-7141 Schwieberdingen (DE)**
Erfinder : **Lorenz, Jochen, Dipl.-Ing.**
**Kapellenweg 12**
**D-7121 Ingersheim (DE)**
Erfinder : **Richter, Axel, Dr. Dipl.-Phys.**
**Erlenweg 6**
**D-7251 Wimsheim (DE)**

**Beschreibung**

Die Erfindung betrifft eine Brennkraftmaschine nach der Gattung des Hauptanspruchs.

Durch die Ausrüstung von Brennkraftmaschinen mit Abgasturboladern ist es möglich, wenigstens einen Teil der im Abgas vorhandenen Verlustenergie zurückzugewinnen und der Brennkraftmaschine wieder zuzuführen. Bedingt durch die Arbeitsweise der Abgasturbolader, nennenswerte Ladedrücke erst bei großem Abgasstrom zu liefern, ergibt sich jedoch insbesondere für die stark instationär betriebenen Fahrzeugmotoren der Nachteil mangelnder Leistung und fehlenden Drehmoments im unteren Drehzahl- bzw. Lastbereich.

Aus der EP-A 0 178 485 ist eine Einrichtung zur Regelung des Ladedrucks einer Brennkraftmaschine mit einem Abgasturbolader bekannt, welche durch gezielte statische und dynamische Vorsteuerung mit überlagerter Regelung das Ansprechverhalten einer derartigen Brennkraftmaschine zu verbessern versucht.

Bei der Dimensionierung des Turboladers eines Ein-Laser-Systems muß — trotz allen steuerungstechnischen Aufwands — ein Kompromiß eingegangen werden, da mit steigender Größe des Turboladers das Ansprechverhalten (Dynamik) schlechter und die maximale Fördermenge bzw. der maximale Ladedruck höher wird.

Es wurde daher schon vorgeschlagen, die Brennkraftmaschine mit zwei Abgasturbuladern auszurüsten, wobei einer speziell für den unteren Lastbereich der Brennkraftmaschine ausgelegt ist und der zweite Abgasturbolader zum ersten zugeschaltet wird, um dem vollen Lastbereich der Brennkraftmaschine abzudecken. Mit einem derartigen System, wie es beispielsweise in der DE-OS 34 20 015 beschrieben ist, ist ein Aufladesystem geschaffen, das schon bei niedrigen Drehzahlen einen spürbaren Drehmoment- und Leistungszuwachs der Brennkraftmaschine erbringt und über den ganzen Drehzahlbereich ohne nennenswerten Leistungseinbruch wirksam ist.

Es ist Aufgabe der Erfindung, dieses Aufladesystem durch gezielte elektronische Regelung bzw. Steuerung weiter zu optimieren, die Leistungs- und Drehmomenteinbrüche im Übergangsbereich zwischen den unterschiedlichen Lastzuständen weiter zu verringern und Brennkraftmaschine und Abgasturbolader wirksam vor Überlastung zu schützen.

Die Aufgabe wird durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß das Aufladesystem nach der DE-OS 34 20 015 durch eine gezielte elektronische, den unterschiedlichen Betriebsbedingungen der Brennfraftmaschine einschließlich des Aufladesystems angepaßte Regelung bzw. Steuerung weiter optimiert ist und ein Einbruch im Leistungs- bzw. Drehmomentverhalten des Gesamtsystems praktisch nicht mehr spürbar ist.

Die so aufgeladene Brennkraftmaschine weist ein Gesamtverhalten auf, das einer wesentlich großvolumigeren Brennkraftmaschine mit einer höheren Zylinderzahl entspricht. Darüber hinaus wird erreicht, daß Brennkraftmaschine und Aufladesystem sicher vor Überlastung/Beschädigung geschützt sind.

Die Erfindung wird anhand von in den Zeichnungen dargestellten Ausführungsbeispielen nachstehend näher erläutert.

Es zeigt:

Fig. 1 ein Blockschaltbild einer Abgasturbolader- Anlage einer Mehrzylinder-Brennkraftmaschine,

Fig. 2 ein Blockschaltbild einer Steuerung/ Regelung der Abgasturbolader- Anlage nach der Erfindung,

Fig. 3 eine Tabelle mit einer Zuordnung von Tastverhältniswerten zu Betriebsbereichen,

Fig. 4 ein als Tabelle dargestelltes, quantisiertes und digitalisiertes Tastverhältnis- Vorsteuer-Kennfeld,

Fig. 5 eine Tabelle nach Fig. 4, jedoch für ein Tastverhältnis- Hysterese- Kennfeld,

Fig. 6 ein Diagramm, das einen Umschaltvorgang zwischen dem Tastverhältnis- Vorsteuer- und dem -Hysterese- Kennfeld erläutert,

Fig. 7 eine Tabelle nach Fig. 4, jedoch für eine Ladelufttemperatur- Vorsteuer- Korrektur- Kennlinie,

Fig. 8 eine Tabelle nach Fig. 4, jedoch für ein Solldruck- Kennfeld,

Fig. 9 eine Tabelle nach Fig. 4, jedoch für eine Ladelufttemperatur- Solldruck- Korrektur- Kennlinie,

Fig. 10 ein Diagram mit Betriebsbereichen für Vorsteuerung und Regelung,

Fig. 11 eine Tabelle nach Fig. 4, jedoch für ein Proportionalparameter- Kennfeld,

Fig. 12 eine Tabelle nach Fig. 4, jedoch für ein Integralparameter- Kennfeld,

Fig. 13 eine Tabelle nach Fig. 4, jedoch für ein Differentialparameter- Kennfeld,

Fig. 14 ein Diagramm mit einer Hysteresekennlinie für eine Ansteuerung eines Entlüftungsventils,

Fig. 15 ein Flußdiagramm eines Umschaltmoduls,

Fig. 16 ein Flußdiagramm eines Integralanteilmoduls,

Fig. 17 ein Flußdiagramm eines Differentialanteilmoduls,

Fig. 18 ein Flußdiagramm eines Ventilansteuerungsmoduls,

Fig. 19 ein Flußdiagramm eines Hauptprogramms,

Fig. 20 ein Flußdiagramm eines ersten Unterbrechungsprogramms,

Fig. 21 ein Flußdiagramm eines zweiten Unterbrechungsprogramms.

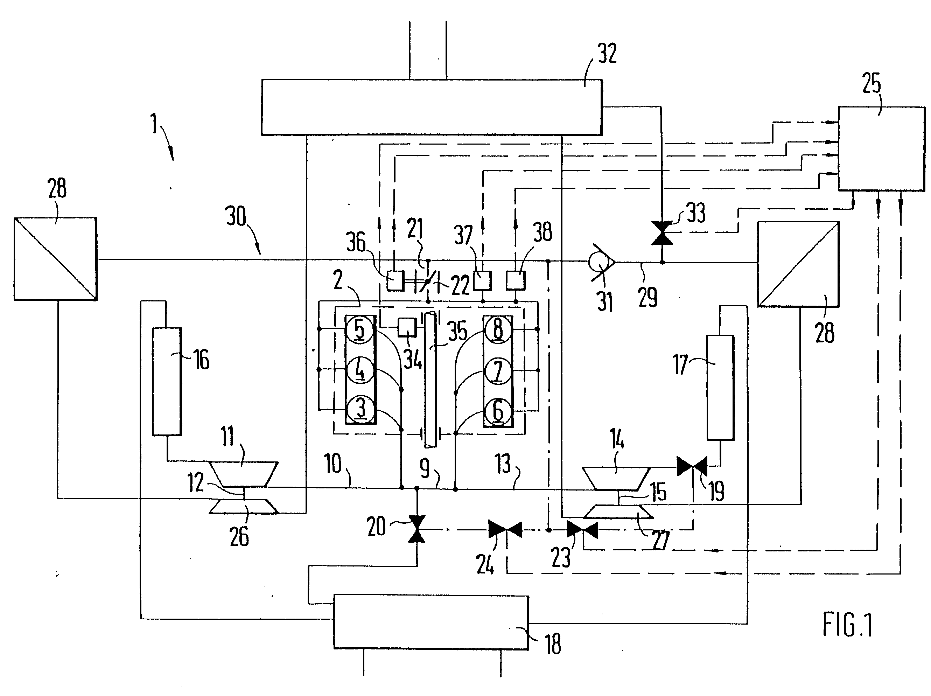

In Fig. 1 ist mit 1 eine Abgasturboladeranlage für eine Brennkraftmaschine 2 gezeigt. Zylinder 3 bis 8 sind (in nicht notwendiger Weise) in zwei Gruppen aufgeteilt. Die Abgasrohre aus den Zylindern münden in ein gemeinsames Abgassammelrohr 9, von dem eine Abgasteilung 10 zum Antrieb einer Turbine 11 eines ersten Abgasturboladers 12 und eine weitere Abgasleitung 13 zum Antrieb einer Turbine 14 eines zweiten Abgasturboladers 15 ausgeht. Der Ausgang der Turbinen 11 und 14 kann entweder über Vorschalldämpfer 16, 17 bzw. Katalysatoren oder auch direkt über Rohrleitungen in einen Endschalldämpfer 18 geführt sein.

In die Abgasleitung 13 der Turbine 14 ist ein Zuschaltventil 19 eingesetzt, das sowohl vor als auch hinter der Turbine 14 angeordnet sein kann. Ferner ist das Abgassammelrohr 9 über ein Abblaseventil (Wastegate) 20 mit dem Endschalldämpfer 18 verbunden. Zuschaltventil 19 und Abblaseventil 20 sind pneumatisch betätigte Ventile, die in nicht angesteuertem Zustand geöffnet sind. Pneumatische Hilfsenergie, die einem Sammelsaugrohr 21 vor einem Leistungssteuerorgan (Drosselklappe) 22 entnommen wird, wird den Ventilen 19, 20 über ihnen zugeordnete Steuerventile 23, 24 zugeführt. Die elektrisch betriebenen Steuerventile 23, 24 werden durch ein Steuergerät 25 mit einem Tastverhältnis beaufschlagt und sind im nicht angesteuerten Zustand geschlossen. Genauer betrachtet wird ein Steuerraum des Zuschaltventils 19 bzw. des Abblaseventils 20 entsprechend dem anliegenden Tastverhältnis mehr oder weniger mit einem Druckmedium hohen Drucks (über die Druckentnahmestelle im Sammelsaugrohr 21 stromauf der Drosselklappe 22), bzw. mit einem Druckmedium niedrigen Drucks, beispielsweise der Atmosphäre (Druckentnahmestelle im Luftfilter 32) verbunden, wobei im nicht angesteuerten Zustand der Steuerventile 23, 24 der Steuerraum auf Atmosphärendruck liegt; aus Übersichtlichkeitsgründen wurde in der Fig. 1 auf eine derartige Betrachtung jedoch verzichtet.

Die von den Turbinen 11 und 14 angetriebenen Verdichter 26, 27 fördern Druckluft über Ladeluftkühler 28 zum Sammelsaugrohr 21; vom Sammelsaugrohr 21 verteilt sich die Ladeluft gleichmäßig auf die Einzelsaugrohre zu den Zylindern 3 bis 8. In einem Teilabschnitt 29 einer Ladeluftleitung 30 ist ein Rückschlagventil 31, wie est in der DE-OS 34 20 015 näher beschrieben ist, eingesetzt. In einem Bypass zum Verdichter 27, der den Teilabschnitt 29 der Ladeluftleitung 30 mit einem Luftfilter 32 verbindet, ist ein Entlüftungsventil 33 eingesetzt; dieses ist über das Steuergerät 25 ansteuerbar.

Schließlich erfaßt das Steuergerät noch Signale von einem Drehzahlsensor 34 (Drehzahl nmot der Kurbelwelle 35 des Motors 2), einem Drosselklappenstellungssensors 36 (Stellung der Drosselklappe 24, Drosselklappenwinkel dkwin), einem Saugrohrdrucksensor 37 (Saugrohrdruck pist im Saugrohr 22, stromabwärts der Drosselklappe) und einem Temperatursensor 38 (Ladelufttemperatur tll), das es in entsprechende Ansteuersignale für die Steuerventile 23, 24 des Zuschaltventils 19 und des Abblaseventils 20 und für das Entlüftungsventil 33 umsetzt.

Das Steuergerät ist in an sich bekannter Mikrorechnertechnik aufgebaut und umfaßt im wesentlichen einen Ein- Chip- Mikrorechner oder einen Mikroprozessor, beispielsweise vom Typ 8031 der Firma Intel, flücktige und nichtflüchtige Speicher, analoge bzw. digitale Ein- und Ausgangsbausteine sowie Anpassungs- und Treiberbausteine. Einzelne Regelungs- und Steuerungsmodule sind als Software realisiert und zusammen mit an Stützstellen erfaßten, quantisierten und digitalisierten Kennlinien und Kennfeldern in den nichtflüchtigen Speichern abgelegt.

Saugrohrdruck pist, Ladelufttemperatur tll, Drehzahl nmot und Drosselklappenwinkel dkwin werden analog oder digital erfaßt oder können dem Steuergerät 25 gegebenenfalls auch von einem Motormanagememtrechner zur Verfügung gestellt werden. Analoge Größen werden hierbei über einen A/D-Wandler in für den Mikroprozessor verwertbare Signale gewandelt.

Selbstverständlich kann das Steuergerät auch diskret aus analogen/digitalen Bauelementen/Bausteinen aufgebaut sein.

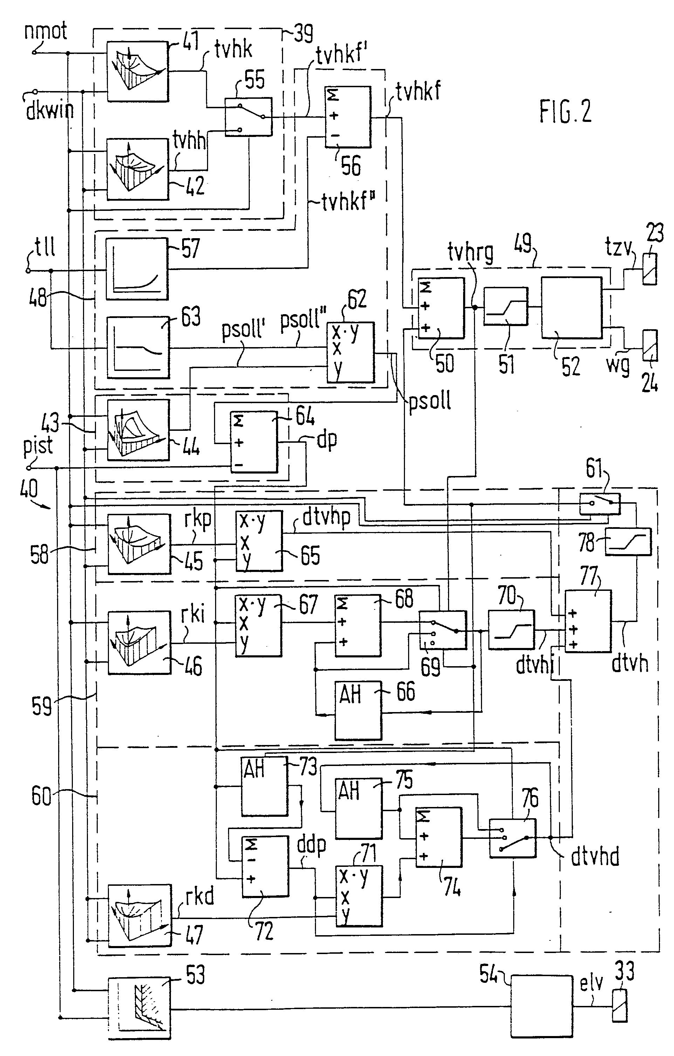

In Fig. 2 sind die Funktionen des Steuergeräts als Blockschaltbild von Steuerungs- bzw. Regelungsmodulen dargestellt. Die Ansteuerung der beiden Ventile im Abgasstrang (des Zusschaltventils 19 und des Abblaseventils 20 bzw. deren Steuerventile 23, 24) erfolgt prinzipiell entsprechend einer von den Zustandsgrößen der Brennkraftmaschinen abhängigen Vorsteuerung (Vorsteuerungsmodul 39), der eine wenigstens saugrohrdruckabhängige Regelung (Regelungsmodul 40) überlagert ist. Der Ansteuerungswert wird geeigneten statischen wie dynamischen Begrenzungen unterworfen. Die Vorsteuerung erfolgt über Kennfelder 41, 42, die einem Wertepaar der Zustandsgrößen (Drehzahl nmot und Drosselkalppenwinkel dkwin) einen Tastverhältnis- Kennfeldwert tvhk bzw. Tastverhältnis- Hysteresewert tvhh für das Tastverhältnis zuordnen.

Die Regelung 40 weist eine PID-ähnliche Struktur auf, wobei der Sollwert (psoll, Sollwertvorgabemodul 43) und die Reglerparameter (rki, rkp, rkd) betriebspunktabhängig sind und über Kennfelder 45-47 in Abhängigkeit von Drehzahl nmot und Drosselklappenwinkel dkwin bereitgestellt werden. Mittels einer von der Ladelufttemperatur tll abhängigen Korrektur (Korrekturmodul 48) wird auf Vorsteuerung und Sollwert psoll' eingewirkt, wobei bei einem Ansteigen der Ladelufttemperatur tll im leistungsmindernden Sinn auf den Ladedruck eingewirkt wird, um ein Klopfen der Brennkraftmaschine 2 zu verhindern.

Im Ansteuermodul 49 werden die Werte von Vorsteuerung tvhkf und Regelung dtvh zusammengesetzt, 50 und geeigneten statischen wie dynamischen Begrenzungs- bzw. Anpassungsfunktionen unterworfen, 51, in Ansteuersignale tzv bzw. wg für das Zuschalt- 19 bzw. Abgasventil 20 aufgesplittet, in Tastverhältnisse gewandelt und über eine Treiberstufe 52 auf die Steuerventile 23 und 24 geführt.

Schließlich wird noch das Entlüftungsventil 33 über ein Hysteresekennfeld 53, welches aus einem Wertepaar aus dem Saugrohrdruck pist und der Motordrehzahl nmot bestimmt, ob das Entlüftungsventil 33 geöffnet oder geschlossen werden soll, und eine Treiberstufe 54 angesteuert; hierdurch wird ein Pumpbetrieb des zweiten Abgasturboladers 15 vermieden. Ferner entsteht bei sich aufbauendem Ladedruck durch das Schließen des Ventils 33 ein Druckstoß im Teilabschnitt 29 der Ladeluftleitung 30, so daß ein (in der DE-OS 34 20 015 gezeigter) Ventilkörper des Rückschlagventils 30 beim Abheben von seinem Sitz unterstützt wird.

Die Funktion des Zuschaltventils 19 und des Abblaseventils 20 erklärt sich wie folgt:

Das Zuschaltventil 19 ermöglicht eine kontinuierlich verstellbare Beaufschlagung des zweiten Abgasturboladers 15 mit Abgas und eine Beschleunigung seiner Laderwelle. Die darüber abfließende Abgasmenge reduziert gleichzeitig die dem ersten Abgasturbolader 12 zufließende Abgasmenge, so daß die Funktion des Zuschaltventils 19 — bezüglich des ersten Abgasturboladers — der eines Wastegates (Abblaseventils) bei einfach aufgeladenem Motor entspricht.

Das Wastegate ist gemeinsames Abblaseventil für beide Abgasturbolader 12, 15.

Die Ansteuerung des Zuschalt- 19 bzw. Agglaseventils 20 erfolgt in der Weise, daß sich ein Schließgrad (100 % entspricht dem geschlossenen Zustand des Zuschalt- bzw. Abblaseventils) durch das am jeweiligen Steuerventil (getaktet betrieben) anliegende Tastverhältnis (bei konstanter Taktfrequenz) bestimmt; der Steuerbereich liegt hierbei zwischen 0 % und 100 %. Eine Ansteuerung der beiden Ventile mit einem von 0 % bzw. 100 % abweichenden Tastverhältnis (nicht angesteuert bzw. voll angesteuert) erfolgt für die beiden Ventile grundsätzlich alternativ, d. h., es gibt keinen Zustandspunkt der Brennkraftmaschine 2, bei der beide Ventile gleichzeitig mit einem derartigen Tastverhältnis beaufschlagt werden.

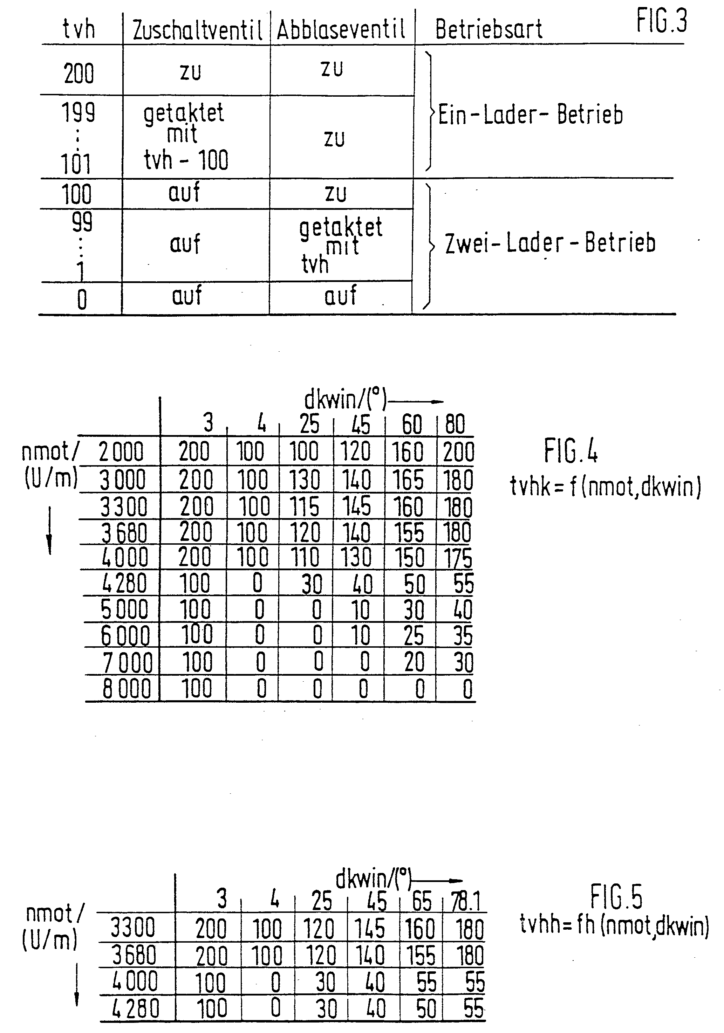

Hieraus ergibt sich die Möglichkeit, den Zustand beiden Ventile eindeutig durch nur eine Bezugszahl darzustellen, einem « Tastverhältnis tvh » mit dem Bereich 0 bis 200 (siehe Fig. 3): Im Bereich von 0 bis 100 stellt tvh direkt das Tastverhältnis (zweites Tastverhältnis wg) für das Abblaseventil 20 dar. Im Bereich zwischen 100 bis 200 ergibt sich das Tastverhältnis (erstes Tastverhältnis tzv) für das Zuschaltventil 19 aus tvh durch Substraktion von 100. Das Abblaseventil ist in diesem Bereich voll angesteuert, also zu.

Es wird somit lediglich ein Kennfeld für beide Ventile benötigt; es ergibt sich ein numerisch kontinuierlicher Übergang der Ansteuerung von einem Ventil zum anderen, so daß zusätzlich die Regelung vereinfacht wird. Der Bereich von tvh > 100 bis tvh = 200 sei nachfolgend « Ein- Lader- Betrieb », (auch wenn dort der zweite Lader bereits zu arbeiten gebinnt) und der Bereich von tvh = 0 bis tvh = 100 « Zwei- Lader- Betrieb » genannt.

Die Ermittlung des Tastverhältnisvorsteuerwertes tvhkf erfolgt, wie schon weiter oben beschrieben, über Kennfolder 41, 42 aus der Drehzahl nmot und dem Drosselklappenwinkel dkwin. Ein Beispiel für ein Tastverhältnis- Vorsteuer- Kennfeld ist Fig. 4 zu entnehmen.

In der Nähe des Zuschaltpunktes sollten die Leitungsdaten der Brennkraftmaschine in den beiden Betriebszuständen

a) tvhk wenig größer 100, d. h., Abblaseventil 20 zu, Zuschaltventil 19 fast ganz geöffnet; Abgasgegendruck hoch und

b) tvhk kleiner 100, d. h. Zuschaltventil 19 ganz geöffnet, Abblaseventil 20 teilweise geöffnet, Abgasgegendruck niedrig,

nahezu gleich sein (wobei bei b) der Wirkungsgrad des Motors höher ist).

Aus dynamischen Gründen ist jedoch ein schnelles Umschalten in den Zustand b) erwünscht. Dieses Verhalten wird dadurch realisiert, daß im Tastverhältnis- Vorsteuer- Kennfeld tvhk = f(nmot, dkwin) bei jeder Lastlinie (gegeben durch dkwin = konstant) der Tastverhältnis- Kennfeldwert tvhk über nmot einen steilen Sprung von größer 100 nach kleiner 100 im Zuschaltpunkt ausführt. Bewegt sich der Betriebspunkt der Brennkraftmaschine im Bereich des Zuschaltpunktes (tvhk = 100), so führt dies zu einem unerwünschten Hin- und Herspringen zwischen den Betriebspunkten a) und b).

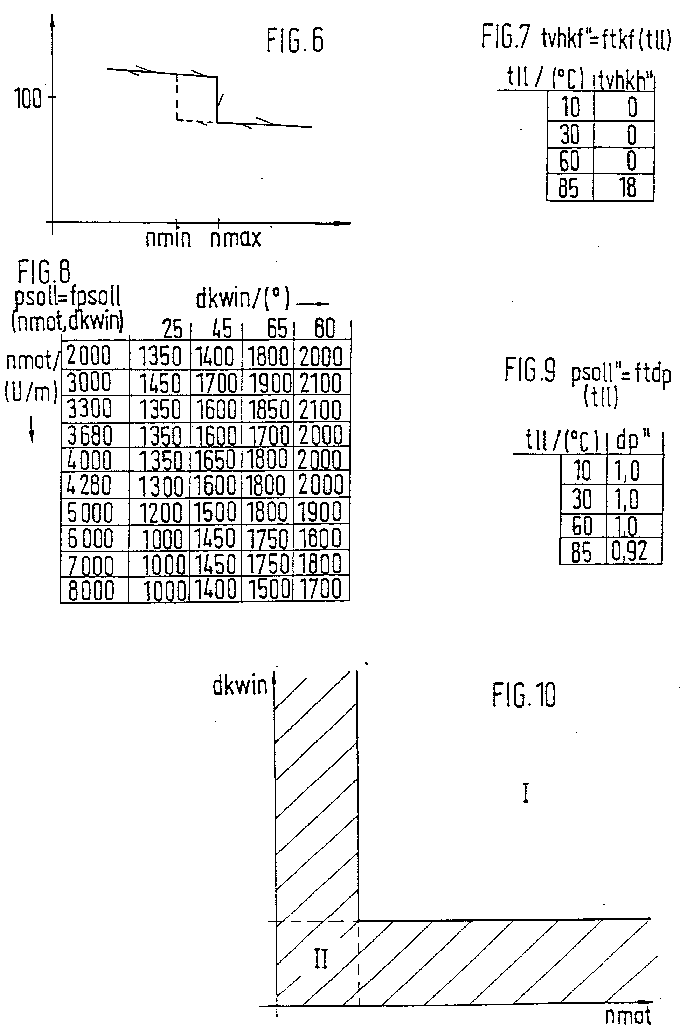

Abhilfe schafft hier das Tastverhältnis- Hysterese- Kennfeld tvhh = fh(nmot, dkwin) 42, für welches ein Beispiel in Fig. 5 angegeben ist. Die Umschaltung zwischen den Kennfeldern 41 und 42 erfolgt über ein Umschaltmodul 55 (siehe Fig. 2), welches die Funktion des Diagrammes nach Fig. 6 erfüllt. Befindet sich der Betriebspunkt auf dem durchgezogenen Kennlinienteil des Diagrammes, so gibt das Vorsteuerungsmodul 39 den Wert des Tastverhältnis- Vorsteuer- Kennfelds 41 aus; befindet er sich auf der gestrichelten Linie, gibt es den Wert des Tastverhältnis- Hysterese- Kennfelds 42 aus. Ein Flußdiagramm für dieses Umschaltmodul 55 wird später noch beschrieben.

Ein weiteres Problem entsteht beim Schaltvorgang durch den Übergang von hoher Last auf Schubbetrieb (Drosselklappe 22 nicht angesteuert): In den Ladeluftleitung steht hierbei stromaufwärts der Drosselklappe 22 — dort befindet sich die Abnahmestelle für den Hilfsdruck — kurzzeitig ein hoher Druck. Wenn nun für Drehzahlen nmot unterhalb eines Drehzahlgrenzwerts für das Umschalten in den Zwei- Lader- Betrieb ein Tastverhältnis von 100 anliegt, so wird das Turbinenzuschaltventil plötzlich voll aufgedrückt, wodurch der erste Abgasturbolader 12 rasch an Energie verliert. Entsprechendes gilt oberhalb dieses Drehzahlgrenzwerts, d. h. im Zwei- Lader- Betrieb; dort würde ein Tastverhältnis tvhk = 0 bedeuten, daß das Ablaseventil 20 öffnet und somit wertvolle Energie beider Abgasturbolader verlorengeht.

Das Tastverhältnis- Vorsteuer- Kennfeld 41 nach Fig. 4 weist deshalb eine weitere Besonderheit auf: Jede Drehzahlkennline nmot = konstant führt am unteren Ende des Wertebereichs des Drosselklappenwinkels dkwin einen steilen Sprung im Tastverhältnis- Kennfeldwert tvhk aus. Der Tastverhältnis- Kennfeldwert tvhk wird hier für Drehzahlen, die unterhalb des Drehzahlgrenzwerts für das Umschalten in den Zwei- Lader- Betrieb liegen, auf seinen Maximalwert tvhk = 200 festgesetzt und für Drehzahlen, die oberhalb diese Grenzwerts liegen, auf den Wert des Zuschaltpunkts tvhk = 100 gesetzt.

Der unkorrigierte Tastverhältnis- Vorsteuerwert tvhkf' wird schließlich noch im Korrekturmodul 48 einer von der Ladeluft- Temperatur tll abhängigen Korrektur unterworfen, welche den unkorrigierten Tastverhältnis- Vorsteuerwert tvhkf' um einen Betrag tvhkf'' reduziert 56, der einer Ladelufttemperatur- Vorsteuer- Kennlinie 57 nach Fig. 8 entnommen wird. Hieraus ergibt sich der Tastverhältnis- Vorsteuerwert tvhkf.

Das Regelungsmodul 40 setzt sich aus einem Proportionalmodul 58, einem Integralmodul 59 und einem Differentialmodul 60 zusammen. Der am Ausgang des Regelungsmoduls 40 anstehende Regelungsanteil dtvh ist jedoch nur aktiv (Schaltmodul 61), sofern die Drehzahl nmot und der Drosselklappenwinkel dkwin gleichzeitig über für den Einsatz der Regelung maßgeblichen Schwellwerten nreg und dkwreg liegen, siehe Fig. 10, unschraffierter Bereich I. Liegt wenigstens einer der beiden Parameter unter seinem maßgeblichen Schwellwert (schraffierter Bereich II), entfällt die Berechnung des Regelungsanteils dtvh und dieser wird zu Null gesetzt.

Ist das Regelungsmodul 40 durch Software realisiert, so erfolgt die Berechnung des Regelungsanteils dtvh in festen Zeitabständen. Dies ermöglicht, das zeitliche Integral des Integralanteils 59 durch eine Summe und das zeitliche Differential des Differentialanteils 60 durch eine Differenz zu ersetzen.

Im Sollwertvorgabemodul 43 wird zunächst über das Solldruckkennfeld spoll' = fpsoll(nmot, dkwin) nach Fig. 8 der unkorrigierte Ladedruck- Sollwert psoll' bereitgestellt. Dieser wird im Korrekturmodul 48 multiplikativ, 62, mit einem Wert psoll'', welcher im Korrekturmodul über eine Ladelufttemperatur- Solldruck- Kennlinie psoll'' = ftps(tll) 63 nach Fig. 9 aus der Ladelufttemperatur bestimmt wird, zum Solldruck psoll korrigiert. Schließlich wird noch die Regeldifferenz dp durch Differenzbildung, 64 des Saugrohrdrucks pist mit dem Solldruck psoll bestimmt.

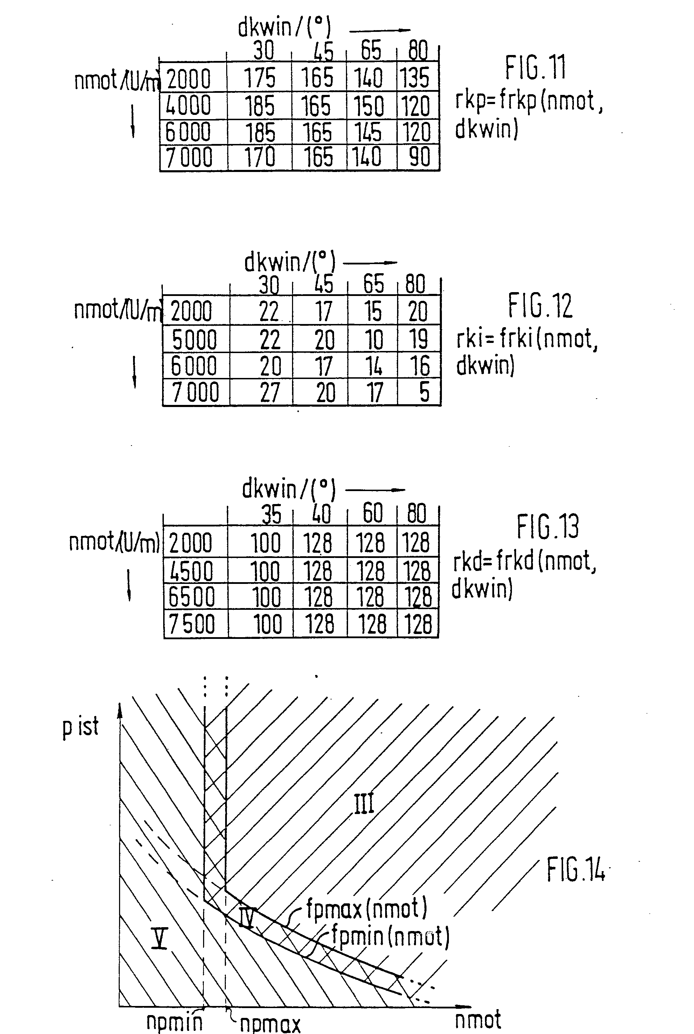

Der Proportionalanteil dtvhp = dp*rkp wird im Proportional- Modul 58 durch Multiplikation 65 der Regeldifferenz dp mit dem Proportionalparameter rkp, welcher aus dem Proportionalparameter- Kennfeld rkp = frkp(nmot, dkwin) 45, siehe auch Fig. 11, bestimmt wird.

Der Integralanteil dtvhi(k) = dtvhi(k—1) + dp*rki wird durch Summenbildung bestimmt, indem der zum vorausgehenden Zeitpunkt (k—1) berechnet Wert des I-Anteils dtvhi(k—1) (in Fig. 2 symbolisch dargestellt durch ein Speicherglied 66) zum Produkt dp*rki 67 aus dem Integralparameter rki und der Regeldifferenz dp addiert 68 wird. Der Integralparameter rki = frki(nmot, dkwin) wird dabei aus dem Integralparameter- Kennfeld 46 (siehe auch Fig. 12) bestimmt.

Allerdings unterliegt die Neuberechnung des I-Anteils dtvhi(k) gewissen Bedingungen (Einfrierbedingungen), bei deren Eintreten ein Schaltmodul 69 den Altwert dtvhi(k—1) beibehält, wodurch sich eine lokale Stabilität des I-Anteils ergibt und dessen « Weglaufen » verhindert wird, beispielsweise wenn der Summenwert tvhrg in die Begrenzung läuft.

Folgende Bedingungen führen zur Beibehaltung des Altwertes:

1. |dp| größer dpmax,
2. tvhrg = 200 und dp größer 0 (Anschlag oben),
3. tvhrg = 0 und dp kleiner 0 (Anschlag unten),
4. tvhrg = 100 und dp größer 0 und Zwei- Lader- Betrieb (Anschlag oben in Zwei- Lader- Betrieb).

Schließlich wird der I-Anteil noch einer Begrenzung 70 unterworfen, da der I-Anteil des Tastverhätnis nur beschränkt beeinflussen soll (beispielsweise |dtvhi| kleiner = 30).

Der Differentialanteil dtvhd(k) = dtvhd(k—1) + ddp*rkd ist bestimmt durch Multiplikation 71 der zeitlichen Änderung der Regeldifferenz ddp = dp(k) — dp(k—1), errechnet durch Substraktion 72 des Neuwertes der Regeldifferenz dp(k) vom Altwert dp(k—1) (symbolisch dargestellt durch Speicherglied 73), mit dem Differentialparameter rkd, und der Addition 74 dieses Wertes zum Altwert des D-Anteils dtvhd(k—1). Der Differentialparameter rkd = frkd(nmot, dkwin) wird dem Differentialparameter- Kennfeld 47 (siehe auch Fig. 13) entnommen, der Altwert dtvhd(k—1) durch Speicherung 75 bereitgestellt.

Der D-Anteil ist jedoch nur aktiv (Schaltmodul 76), solange die Regeldifferenz dp größer als ein Schwellwert dpmin und die zeitliche Änderung der Regeldifferenz ddp größer als ein Schwellwert ddpmin ist, ansonsten wird der Altwert dtvhd(k—1) beibehalten.

Die Beiträge von P-58, I-59, und D-Anteil 60 werden summiert, 77, über ein Begrenzungsmodul 78 auf einen Wert von betragsmäßig etwa 100 gebrenzt und über das Schaltmodul 61 dem Ansteuermodul 49 zugeführt, sofern der Regelungsanteil aktiv ist (Fig. 10, Betriebspunkt (nmot, dkwin) im Bereich I.

Das Schaltmodul 61 setzt ferner den Ausgang des Schaltmoduls 69 im Integralmodul 59 und dem Inhalt des Speicherglieds 73 auf Null, sofern die Berechnung des Regelungsanteils unterdrückt wird (Fig. 10, Betriebspunkt (nmot, dkwin) in Bereich II).

Im Ansteuermodul 49 wird der begrenzte Regelungsanteil dtvh zum Tastverhältnis- Vorsteuerwert tvhkf addiert, 50 und auf einen Wert (Tastverhältnis aus Regelung und Vorsteuerung tvhrg im Bereich von 0 kleiner gleich tvhrg kleiner gleich 200 begrenzt) 51. Hier erfolgt zusätzlich die dynamische Begrenzung:

a) Trotz des schnellen Umschaltens in den 2-Lader- Betrieb am Zuschaltpunkt läßt sich mit der bisher beschriebenen Methode ein momentaner Leistungseinbruch nicht ganz vermeiden ; vor allem bei stark dynamischer Fahrweise (Beschleunigung) wirkt er sich negativ aus. Die wirkungsgradoptimierte Abstimmung des Tastverhältnis- Vorsteuer- Kennfeldes, ausgelegt für quasistationäre Fahrweise, zeigt nämlich im Zuschaltpunkt einen relativ großen Tastverhältnissprung nach unten, d. h., das Wastegate wird deutlich geöffnet und bläst ab, obwohl hier im dynamischen Fall dieses Abgas vorübergehend dringend benötigt würde, um den Ladedruckeinbruch zu minimieren. Auch die· Regelung kann hier nicht genügend ausgleichen :

Der Einfluß des P-Anteils, für quasistationäres Fahren optimiert, reicht bei weitem nicht aus, das Tastverhältnis auf 100 anzuheben,

Der I-Anteil ist ohnehin träge,

selbst der D-Anteil kommt im Aufbau (unter anderem unter Berücksichtigung von Programmlaufzeiten und einer gewählten Ventiltaktfrequenz von beispielsweise 12Hz) zu spät.

Als Abhilfe wurde folgende Funktion eingeführt :

Beim Übergang von Ein- in den Zwei- Lader- Betrieb, d. h., wenn der Summenwert aus Vorsteuerung und Regelung tvhrg von größer 100 auf einen Wert kleiner 100 springen würde, wird das Tastverhätlnis bei dem Wert tvhrg = 100 gesperrt, d. h., festgehalten.

Die Sperre wird aufgehoben, wenn

dp = psoll-pist kleiner als dpmax ist, d. h., der Ladedruckeinbruch ist nahezu beseitigt ist, oder

tvhkf wieder größer als 100 wird, oder

wenn eine vorgebbare Zeitspanne tdyn abgelaufen ist (ungefähr 1 Sekunde).

Diese Funktion sorgt im dynamischen Fall für beschleunigungsoptimales Zuschaltverhalten.

b) Befindet sich der Motor im Zwei- Lader- Betrieb — und zwar auch vorsteuerungsseitig — so verhindert eine Sperre das Rückschalten in den Ein- Lader- Betrieb.

Gedanke ist hierbei, daß eine kurzfristige Störung meist schnell ausgeglichen werden kann und mit dieser Sperre ein Umschalten in den Ein- Lader- Betrieb mit sofort anschließendem Zurückschalten in den Zwei- Lader- Betrieb vermieden wird. Außerdem ergibt dieses Sperrverhalten eine Schutzfunktion für den Motor.

Funktion : Ist tvhkf kleiner 100 und wird tvhrg größer 100, so wird die Sperre aktiviert, d. h., tvhrg = 100 gesetzt. Die Sperre bleibt in Wirkung, solange die Voraussetzung erfüllt ist.

Bei Verwendung einfacher Ventile kann es sinnvoll sein, den Arbeitsbereich und damit das Tastverhältnis an den Aussteuerungsgrenzen einzuschränken, da dort eine wohldefinierte Arbeitsstellung aufgrund eines gewählten Tastverhältnisses nicht einstellbar oder nicht eindeutig reproduzierbar ist. Das dem Steuerventil zugeführte Tastverhältnis erfährt deshalb eine weitere statische Begrenzunf (51), für die hier ein (ausführungsabhängiges) Beispiel gegen ist :

Für 0 kleiner gleich tvhrg kleiner 7 wird tvhrg zu 0 gesetzt,

für 8 kleiner gleich tvhrg kleiner 15 wird tvhrg zu 15 gesetzt,

für 85 kleiner gleich tvhrg kleiner 92 wird tvhrg zu 85 gesetzt,

für 92 kleiner tvhrg kleiner gleich 100 wird tvhrg zu 100 gesetzt.

Das Modul Treiberstufe 52 trennt nun das Summensignal aus Vorsteuerung und Regelung tvhrg in die Einzelansteuerungs-Signale für die Steuerventile 23, 24 von Zuschaltventil 19 und Abblaseventil 20 auf und wandelt sie in Tastverhältnissignale tzv und wg, die dann — falls erforderlich verstärkt — den Steuerventilen 23 und 24 zugeführt werden. Die Auftrennung erfolgt wie schon weiter oben unter Fig. 3 beschrieben.

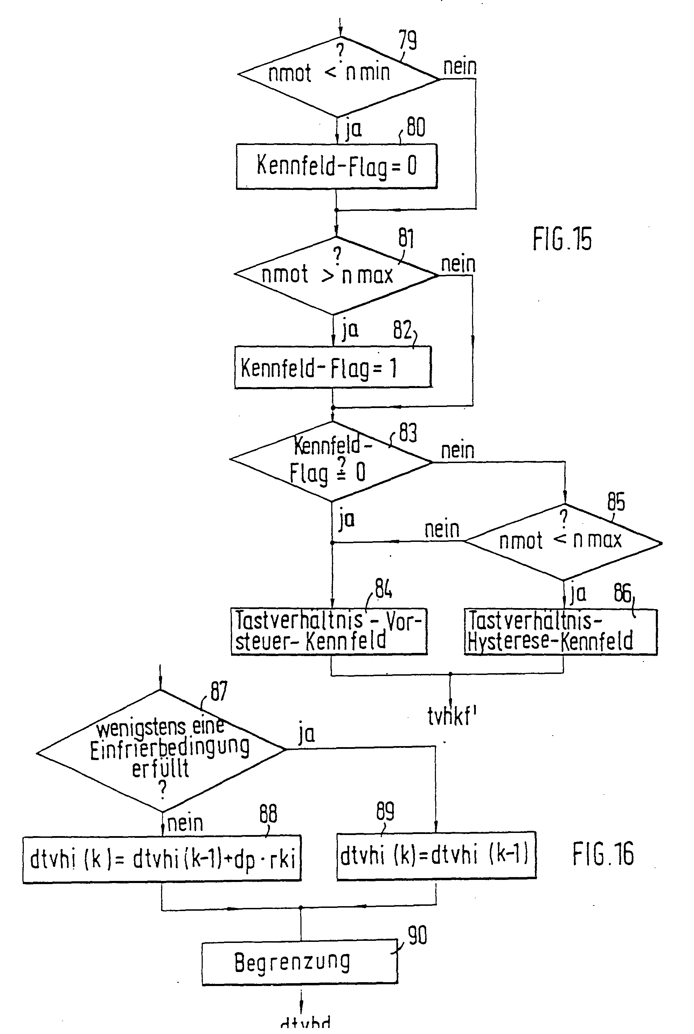

Die Ansteuerung 53, 54 des Entlüftungsventils 33 sorgt dafür, daß der zweite Abgasturbolader 15 verdichterseitig auch im nicht zugeschalteten Betrieb einen Volumenstrom fördert, in dem das Entlüftungsventil 33 aufgesteuert ist, so daß Pumpbetrieb vermieden wird. Das Schaltverhalten des Entlüftungsventils 33 ist durch zwei Grenzlinien beschrieben, siehe Fig. 14 :

Einer Drehzahlgrenze unterhalb derer das Entlüftungsventil offen ist,

einer Grenzlinie, gegeben durch eine nmot-Kennlinie, unterhalb derer das entlüftungsventil offen ist.

Die zusammengefügten Grenzlinien sind zu einer Hysterese mit npmax und fpmax(nmot) bzw. npmin und fpmin(nmot) aufgeweitet, um ein dauerndes Auf- bzw. Zuschalten des Ventils zu vermeiden. Das Entlüftungsventil ist also geschlossen, wenn der Betriebspunkt (nmot, pist) sich im Bereich III (von links unten nach rechts oben schraffiert) oder, aus dem Bereich III kommend, im Bereich IV (gekreuzt schraffiert) befindet, und geöffnet, wenn der Betriebsbspunkt im Bereich V (von links oben nach rechts unten schraffiert) liegt oder, aus diesem kommend, in den Bereich IV hineinläuft.

In den weiteren Figuren sind noch Programmodule des Systems beschrieben. In Fig. 15 ist ein Flußdiagramm für das Umschaltmodul 55 wiedergegeben, das die Ausgabe des unkorrigierten Tastverhältnis- Vorsteuerwerts tvhkf' aus dem Tastverhältnis- Vorsteuer- Kennfeld 41 bzw. Tastverhältnis- Hysterese- Kennfeld 42 steuert.

Es wird zunächst überprüft, 79, ob die Drehzahl nmot kleiner als ein Schwellwert nmin ist. Wenn ja, wird ein Kennfeldflag zu 0 gesetzt, 80. Wenn nein, wird der nachfolgende Schritt 80 übersprungen. Anschließend wird überprüft, ob nmot größer als ein zweiter Schwellwert nmax ist, 81. Wenn ja, wird das Kennfeldflag zu 1 gesetzt, 82, wenn nein, wird dieser Schritt übersprungen. Es wird abgefragt, ob das Kennfeldflag gleich 0 ist, 83, wenn ja, wird das Tastverhältnis aus dem Tastverhältnis- Vorsteuer- Kennfeld entnommen, 84. Wenn nein, wird abgefragt, ob nmot kleiner als der zweite Schwellwert nmax ist, 85. Wenn nein, wird das Tastverhältnis ebenfalls aus dem Tastverhältnis- Vorsteuer- Kennfeld, 84 entnommen, wenn ja, wird das Tastverhältnis aus dem Tastverhältnis- Hysterese- Kennfeld bestimmt, 86.

Fig. 16 zeigt ein Flußdiagramm zur Bestimmung des Integralanteils. Es wird zunächst überprüft, ob eine der weiter oben beschriebenen Einfrierbedingungen erfüllt ist, 87. Wenn nein, wird ein Neuwert des I-Anteils dtvhi(k) berechnet 88, wenn ja, wird der Anteil dtvhi(k) gleich dem im vorangegangenen Programmdurchlauf berechneten Altwert dtvhi(k—1) gesetzt, 89. Daran anschließend erfolgt noch eine betragsmäßige Begrenzung des I-Anteils, 90.

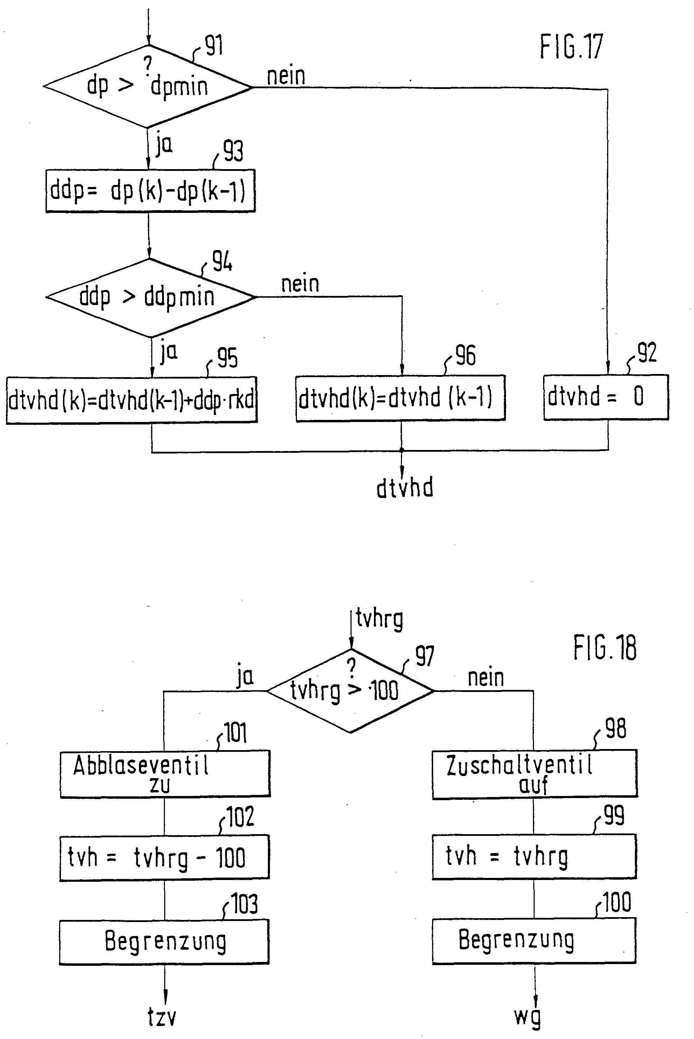

Im Flußdiagramm zur Bestimmung des Differentialanteils nach Fig. 17 wird zunächst untersucht, ob die Regeldifferenz größer als ein erster Schwellwert dpmin ist, 91. Wenn nein, wird der Differentialanteil dtvhd zu 0 gesetzt, 92. Wenn ja, wird in einem weiteren Schritt die zeitliche Änderung der Regeldifferenz ddp = dp(k)—dp(k—1) berechnet, 93 und überprüft, ob die zeitliche Änderung der Regelabweichung ddp größer als ein zweiter Schwellwert ddpmin ist, 94. Wenn ja, wird der Neuwert des Differentialanteils dtvhd(k) neu berechnet, 95. Wenn nein, wird der Differentialanteil dtvhd(k) gleich dem in vorangegangenen Programmdurchlauf bestimmten Altwert dtvhd(k—1) gesetzt, 96.

Schließlich ist noch in Fig. 18 gezeigt, wie die Aufteilung des Tastverhältniswerts aus Steuerung und Regelung zur Ansteuerung des Zuschaltventils bzw. Abblaseventils aufgetrennt wird. In einem ersten Schritt wird zunächst überprüft, ob der Summenwert aus Vorsteuerung und Regelung tvhrg größer als 100 ist, 97. Wenn nein, wird das Zuschaltventil nicht angesteuert (Zuschaltventil offen), 98 und der Tastverhältniswert tvh gleich tvhrg gesetzt, 99.

Im nachfolgenden Schritt erfolgt die Begrenzung des Tastverhältnisses tvh 100, wie dies weiter oben beschrieben ist. Mit dem begrenzten Tastverhältnis wg wird das Steuerventil des Abblaseventils getaktet. Ist die Bedingung 97 dagegen erfüllt, so wird das Abblaseventil voll angesteuert, d. h., es ist geschlossen, 101 und das Tastverhältnis tvh wird aus der Differenz des Summenwerts aus Vorsteuerung und Regelung tvhrg und dem Wert 100 bestimmt, 102. Anschließend wird das Tastverhältnis wieder entsprechend dem einstellbaren Bereich begrenzt, 103 und das Steuerventil 23 des Zuschaltventils 19 mit dem begrenzten Tastverhätnis tzv getaktet.

Selbstverständlich sind Kennlinien, Kennfelder, Grenz- und Schwellwerte nicht allgemeingültig, sondern lediglich als Beispiel für eine bestimmte Brennkraftmaschine angegeben. Sie zeigen jedoch einen Weg auf, wie sie prinzipiell aussehen müssen und leicht in aufgeladene Brennkraftmaschinen angepaßt werden können bzw. wo die Schwerpunkte der Optimierungsarbeit zu legen sind.

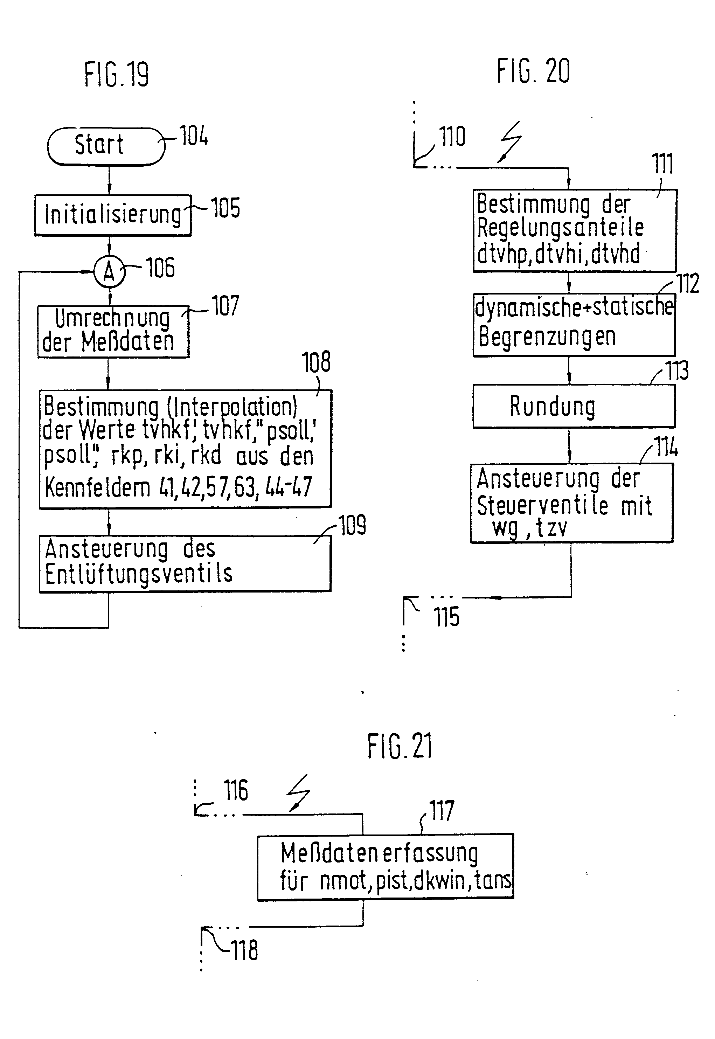

Die Flußdiagramme nach den Fig. 19 bis 21 zeigen ein Beispiel für eine prinzipielle Bearbeitung der einzelnen Programmschritte. Im Hauptprogramm (Fig. 19) erfolgt nach dem Start 104 eine Initialisierung 105 des Rechners, welcher den Arbeitsspeicher, Flags usw. zurücksetzt und die Variablen mit Startwerten belegt. Nach Passieren einer Marke A, 106, werden die Rohdaten der im weiter unten beschriebenen zweiten Unterbrechungsprogramm erfaßten Meßdaten aufbereitet, 107. Anschließend erfolgt eine Interpolation/Extrapolation 108 der Werte, welche aus Kennlinien und Kennfeldern zu bestimmen sind: tvhk, tvhh, tvhkf", psoll', psoll", rkp, rki und rkd. Vor der Bestimmung des unkorrigierten Tastverhältnis-Vorsteuerwerts tvhkf' erfolgt selbstverständlich die Abarbeitung des Programmmoduls nach Fig. 15. Schließlich folgt noch die Ansteuerung des Entlüftungsventils 33, 109 und der Rücksprung zur Marke A, 106.

Das in Fig. 20 gezeigte erste Unterbrechungsprogramm unterbricht das Hauptprogramm 110. Es ist zeitgesteuert und wird etwa alle 10ms abgearbeitet. Es bestimmt die Regelungsanteile (dtvhp, dtvhi (entsprechend Fig. 16) und dtvhd (entsprechend Fig. 17)), 111. Anschließend erfolgt eine Bestimmung der statischen und dynamischen Begrenzungen, 112. Schließlich erfolgt noch die Rundung 113 der Ansteuersignale auf den Arbeitsbereich der Steuerventile 23, 24 und deren Ansteuerung 114 mit den Tastverhältnissen wg und tzv entsprechend Fig. 18 und der Rücksprung 115 ins Hauptprogramm.

Das zweite Unterbrechungsprogramm nach Fig. 21 wird mit höherer Priorität abgearbeitet und unterbricht sowohl das Haupt- als auch das erste Unterbrechungsprogramm, 116. Im gegebenen Fall ist es zündungssynchron gesteuert, d. h., es wird pro Umdrehung der Brennkraftmaschine einmal aufgerufen, beispielsweise durch einen Motormanagementrechner, der hier auch die Meßdaten für die Meßdatenerfassung 117 von nmot, pist, dkwin und tll bereitstellt. Die Meßdatenerfassung 117 kann selbstverständlich auch durch das Steuergerät 23 selbst erfolgen. Anschließend erfolgt wiederum der Rücksprung ins unterbrochene Programm, 118.

**Patentansprüche**

1. Mehrzylinder- Brennkraftmaschine (2) mit zwei aus je einer Turbine (11, 14) und einem davon angetriebenen Verdichter (26, 27) bestehenden Abgasturboladern (12, 15), deren Verdichter (26, 27) über gesonderte Ladedruckleitungen (29, 30) an ein gemeinsames Sammelsaugrohr (21) angeschlossen und deren Turbinen (11, 14) in von einer Abgassammelleitung (9) ausgehende, gesonderte Abgasleitungen (10, 13) eingebaut sind und der eine Abgasturbolader (15) während des Betriebs der Brennkraftmaschine (2) zum anderen Abgasturbolader (12) zuschaltbar ist und in eine von der Abgassammelleitung (9) ausgehende, die Turbinen (11, 14) beider Abgasturbolader (12, 15) umgehende Bypassleitung ein steuerbares Abblaseventil (20) (Wastegate) und in die Abgasleitung der Turbine (14) des zuschaltbaren Abgasturboladers (15) ein steuerbares Zuschaltventil (19) eingesetzt ist, nach dessen Öffnen sich ein in die Ladeluftleitung (29) des Verdichters (14) des zuschaltbaren Abgasturboladers (15) eingesetztes Rückschlagventil (31) durch den sich in der Ladeluftleitung (29) aufbauenden Druck öffnen kann, wobei das Abblaseventil (20) und das Zuschaltventil (19) mittels eines elektronischen Steuergeräts (25) in Abhängigkeit von durch Sensoren (34, 36, 37, 38) erfaßten Zustandsgrößen (nmot, dkwin, pist, tll) der Brennkraftmaschine (2) steuerbar sind, dadurch gekennzeichnet, daß das elektronische Steuergerät (25) ein dem Abblaseventil (20) und dem Zuschaltventil (19) gemeinsames Vorsteuerungsmodul (39), das in Abhängigkeit von den durch die Sensoren (34, 36) erfaßten Zustandsgrößen (nmot, dkwin) arbeitet, und ein wenigstens saugrohrdruckabhängig (pist) arbeitendes Regelungsmodul (40) aufweist, wobei die entsprechende Vorsteuerung und Regelung zur Ansteuerung der beiden Ventile (19, 20) einander überlagert sind.

2. Brennkraftmaschine nach Anspruch 1, dadurch gekennzeichnet, daß als Zustandsgrößen zur Vorsteuerung die Drehzahl (nmot) und die Stellung (Drosselklappenwinkel (dkwin)) des Leistungssteuerungsorgans (Drosselklappe) (22) der Brennkraftmaschine (2) herangezogen werden.

3. Brennkraftmaschine nach Anspruch 2, dadurch gekennzeichnet, daß die Regelung mittels eines Reglers (40) mit zustandsgrößenabhängigen Reglerparametern (rkp, rki, rkd) erfolgt.

4. Brennkraftmaschine nach Anspruch 3, dadurch gekennzeichnet, daß der Regler (40) eine PID- Struktur aufweist.

5. Brennkraftmaschine nach Anspruch 4, dadurch gekennzeichnet, daß die Ansteuerung (49) des Abblaseventils (20) und des Zuschaltventils (19) dynamischen Begrenzungen (51) unterworfen ist.

6. Brennkraftmaschine nach Anspruch 5, dadurch gekennzeichnet, daß die Ansteuerung des Abblaseventils (20) und des Zuschaltventils (19) eine ladelufttemperaturabhängige (tll) Korrektur (48) erfährt.

7. Brennkraftmaschine nach Anspruch 6, mit einem in einem Bypass zum Verdichter des zuschaltbaren Turboladers angeordneten Entlüftungsventil, das mittels des elektronischen Steuergeräts in Abhängigkeit von durch Sensoren erfaßten Zustandsgrößen der Brennkraftmaschine steuerbar ist, dadurch gekennzeichnet, daß das Entlüftungsventil (33) zustandsgrößenabhängig so angesteuert wird, daß ein Pumpen des zuschaltbaren Abgasturboladers (15) vermieden wird, wobei das Entlüftungsventil (33) geschlossen wird, wenn ein aus der Drehzahl (nmot) und dem Saugrohrdruck (pist) gebildetes Wertepaar (nmot, pist) in ein Gebiet einer durch die Drehzahl (nmot) und den Saugrohrdruck (pist) aufgespannten Ebene des Zustandsraums der Zustandsgrößen der Brennkraftmaschine (2) wandert, das nach links durch einen oberen Grenzwert (npmax) und eine obere Drehzahl- Saugrohrdruck- Kennlinie (fpmax(nmot)) begrenzt ist, und daß das Entlüftungsventil (33) geöffnet wird, wenn das Wertepaar (nmot, pist) in ein Gebiet dieser Ebene wandert, das nach rechts durch einen unteren Grennzwert (npmin) und eine untere Drehzahl- Saugrohrdruck- Kennlinie (fpmin(nmot)) begrenzt ist.

8. Brennkraftmaschine nach Anspruch 7, dadurch gekennzeichnet, daß das Zuschaltventil (19) und das Abblaseventil (20) durch pneumatische Hilfsenergie betätigte, im nichtangesteuerten Zustand geöffnete Ventile sind, denen die Hilfsenergie über getaktet betriebene, im nicht angesteuerten Zustand geschlossene Steuerventile (Taktventile) (23, 24) zugeführt wird, welche über das Steuergerät (25) mittels eines Tastverhältnisses (tzv, wg) angesteuert werden.

9. Brennkraftmaschine nach Anspruch 8, dadurch gekennzeichnet, daß die pneumatische Hilfsenergie dem Sammelsaugrohr (21) vor dem Leistungssteuerorgan (Drosselklappe) (22) abgenommen wird.

10. Brennkraftmaschine nach Anspruch 9, dadurch gekennzeichnet, daß der Schließgrad des Zuschaltventils (19) und der Schließgrad des Abblaseventils (20) kontinuierlich im Bereich zwischen 0 % (vollständig geöffnet) und 100 % (vollständig geschlossen) steuerbar ist.

11. Brennkraftmaschine nach Anspruch 10, dadurch gekennzeichnet, daß das dem Zuschaltventil (19) zugeordnete erste Steuerventil (23) nur dann mit einem zwichen 100 % und größer 0 % liegenden ersten Tastverhältnis (tzv) betrieben wird (ein- Lader- Betrieb), wenn das dem Abblaseventil (20) zugeordnete zweite Steuerventil (24) vollausgesteuert (zweites Tastverhältnis wg = 100) ist und das zweite Steuerventil (24) nur dann mit einem zwischen 100 % und 0 % liegenden zweiten Tastverhältnis (wg) betrieben wird (Zwei- Lader- Betrieb), wenn das erste Steuerventil (23) nicht angesteuert ist (erstes Tastverhältnis tzv = 0 %).

12. Brennkraftmaschine nach Anspruch 11, dadurch gekennzeichnet, daß das erste Tastverhältnis (tzv) und das zweite Tastverhältnis (wg) durch eine in einem gemeinsamen Zahlenbereich (zwischen 200 und 0) liegende Bezugszahl (tvh) definiert ist, wobei sich der gemeinsame Zahlenbereich in einen ersten Bereich (zwischen 200 und > 100) und einen zweiten Bereich (zwischen 100 und 0) aufteilt.

13. Brennkraftmaschine nach Anspruch 12, dadurch gekennzeichnet, daß der Ein- Lader- Betrieb durch den ersten Bereich (200 größer oder gleich (tvh) größer 100) und der Zwei- Lader- Betrieb durch den zweiten Bereich (100 größer oder gleich (tvh) größer oder gleich 0) des Ansteuerwerts (tvh) gebildet ist, wobei das Zuschaltventil (19) bei fallendem Ansteuerwert (tvh) im ersten Bereich zunehmend geöffnet wird und im zweiten Bereich voll geöffnet ist und das Abblaseventil (20) im ersten Bereich geschlossen ist und bei fallendem Ansteuertwert (tvh) im zweiten Bereich zunehmend geöffnet wird.

14. Brennkraftmaschine nach Anspruch 13, dadurch gekennzeichnet, daß die Vorsteuerung (39) über ein Tastverhältnis- Vorsteuer- Kennfeld (tvhk = f(nmot, dkwin)) (41) erfolgt, das einem aktuellen Wertepaar aus der Drehzahl (nmot) und dem Drosselklappenwinkel (dkwin) einen zwischen 200 und 0 liegenden Tastverhältnis-Kennfeldwert (tvhk) zuordnet.

15. Brennkraftmaschine nach Anspruch 14, dadurch gekennzeichnet, daß jede Lastkennlinie (dkwin = konstant) im Tastverhältnis- Vorsteuer- Kennfeld (tvhk = f(nmot, dkwin)) (41) einen steilen Sprung im Tastverhältnis- Kennfeldwert (tvhk) über der Drehzahl (nmot) vom Ein- Lader- Betrieb (tvh > 100) in den Zwei- Lader- Betrieb (tvh > 100) aufweist.

16. Brennkraftmaschine nach Anspruch 15, dadurch gekennzeichnet, daß jede Drehzahlkennlinie (nmot = konstant) des Tastverhältnis- Vorsteuer- Kennfelds (tvhk = f(nmot, dkwin) (41) am unteren Ende des Wertebereiches des Drosselklappenwinkels (dkwin) (nicht angesteuertes Leistungssteuerorgan (Drosselklappe), Schubbetrieb) einen steilen Sprung im Tastverhältnis- Kennfeldwert (tvhk) aufweist, welcher diesen unterhalb eines Drehzahlgrenzwertes für das Umschalten in den Zwei- Lader- Betrieb auf dem Maximalwert (tvhk = 200) und oberhalb dieses Drehzahlgrenzwerts auf dem Zuschaltpunkt (tvhk = 100) verharren läßt.

17. Brennkraftmaschine nach Anspruch 16, dadurch gekennzeichnet, daß bei quasistationärem Betrieb der Brennkraftmaschine (2) am Zuschaltpunkt (tvh = 100) ein ständiges Hin- und Herschalten zwischen dem Ein- und Zwei- Lader- Betrieb dadurch vermieden wird, daß der (unkorrigierte) Tastverhältnis — Vorsteuerwert (trvhkf') aus einem Tastverhältnis- Hysterese- Kennfeld (tvhh = fhys(nmot, dkwin)) (42) entnommen wird, sofern die Drehzahl (nmot) abfallend in einen Bereich zwischen einem ersten Grenzwert (nmax) und einem zweiten Grenzwert (nmin) hineinläuft und sonst aus dem Tastverhältnis- Vorsteuer- Kennfeld (tvhk = f(nmot, dkwin)) (41) entstammt.

18. Brennkraftmaschine nach Anspruch 17, dadurch gekennzeichnet, daß die Regelung (40, Regleranteil dtvh) der Vorsteuerung (39, Tastverhältnis- Vorsteuerwert tvhkf) additiv überlagert ist, wobei sich ein Summenwert aus Vorsteuerung und Regelung (tvhrg = tvhkf + dtvh) (50) aus der Summe des Tastverhältnis- Vorsteuerwerts (tvhkf) und des Regleranteils (dtvh) ergibt und der Regleranteil (dtvh = dtvp + dtvi + dtvd) aus der Summe (77) des Proportionalanteils (dtvp), des Integralanteils (dtvi) und des Differentialanteils (dtvd) bestimmt wird.

19. Brennkraftmaschine nach Anspruch 18, dadurch gekennzeichnet, daß die Regelung (40) der Vorsteuerung (39) nur dann überlagert wird, sofern die Drehzahl (nmot) und der Drosselklappenwinkel (dkwin) gleichzeitig über für den Einsatz der Regelung maßgeblichen Schwellwerten (nreg), (dkwreg) liegen.

20. Brennkraftmaschine nach Anspruch 19, dadurch gekennzeichnet, daß ein Sollwert (psoll) für die Regelung zustandsgrößenabhängig ist und einem Ladedruck- Sollwert- Kennfeld (psoll = fpsoll(nmot, dkwin)) (43) entnommen wird.

21. Brennkraftmaschine nach Anspruch 20, dadurch gekennzeichnet, daß der Regleranteil (dtvh) in festen zeitlichen Abständen berechnet wird.

22. Brennkraftmaschine nach Anspruch 21, dadurch gekennzeichnet, daß sich der Proportionalanteil (dtvhp = dp*rkp) (58) des PID- Reglers (40) durch Multiplikation (65) der Regelabweichung (dp = psoll-pist) mit dem zustandsgrößenabhängigen Proportionalparameter (rkp) errechnet, wobei der Proportionalparameter (rkp) aus einem Proportionalparameter- Kennfeld (rkp = frkp(nmot, dkwin)) (45) bestimmt wird.

23. Brennkraftmaschine nach Anspruch 22, dadurch gekennzeichnet, daß der Integralanteil (dtvhi(k) = dtvhi(k—1) + dp(k)*rki(k)) (59) zum Zeitpunkt (k) berechnet wird aus der Summe (68) des Integralanteils (dtvhi(k—1)) (66) zum Zeitpunkt (k—1) und dem Produkt (67) der Regelabweichung (dp(k)) mit dem zustandsgrößenabhängigen Integralparameter (rki(k)), wobei der Integralparameter (rki(k)) aus einem Integralparameter- Kennfeld (rki = frki(nmot, dkwin)) (46) bestimmt wird.

24. Brennkraftmaschine nach Anspruch 23, dadurch gekennzeichnet, daß die Berechnung des aktuellen Werts des Integralanteils (dtvhi(k)) unterdrückt wird und der aktuelle Wert des Integralanteils zum Zeitpunkt (k) gleich dem Wert des zum Zeitpunkt (k—1) berechneten Werts des Integralanteils gesetzt wird (dtvhi(k) = dtvhi(k—1)) (69), sofern wenigstens eine der folgenden Bedingungen erfüllt ist :

Der Betrag der Regelabweichung (|dp|) ist größer als ein Maximalwert (dpmax).

Der zum Zeitpunkt (k—1) berechnete Summenwert aus Vorsteuerung und Regelung (tvhrg(k—1) liegt am oberen Ende des Zahlenbereichs (= 200) und die Regelabweichung (dp(k)) ist größer 0.

Der zum Zeitpunkt (k—1) berechnete Summenwert aus Vorsteuerung und Regelung (tvhrg(k—1)) beträgt 0 und die Regelabweichung (dp(k)) ist kleiner 0.

Der zum Zeitpunkt (k—1) berechnete Summenwert aus Vorsteuerung und Regelung (tvhrg(k—1)) liegt im Zuschaltpunkt (= 100) und die Regelabweichung (dp(k)) ist größer 0 und das System befindet sich im Zwei- Lader- Betrieb.

25. Brennkraftmaschine nach Anspruch 24, dadurch gekennzeichnet, daß der Betrag des Integralanteils (|dtvhi(k)|) auf einen bestimmten Wert begrenzt wird, (70).

26. Brennkraftmaschine nach Anspruch 25, dadurch gekennzeichnet, daß der Differentialanteil (dtvhd(k) = dtvhd(k—1) + rkd(k)*(dp(k)—dp(k—1)))) (59) zum Zeitpunkt (k) berechnet wird aus der Summe (74) des Differentialanteils (dtvhd(k—1) (75) zum Zeitpunkt (k—1) und dem Produkt (71) aus dem zustandsgrößenabhängigen Differentialparameter (rkd(k)) und der Differenz der Regelabweichungen (ddp = dp(k)—dp(k—1)) (72) zu den Zeitpunkten (k) und (k—1), wobei der Differentialparameter (rkd) aus einem Differentialparameter- Kennfeld (rkd = frkd(nmot, dkwin)) (47) bestimmt wird.

27. Brennkraftmaschine nach Anspruch 26, dadurch gekennzeichnet, daß der Differentialanteil (dtvhd(k)) nur dann ungleich 0 ist (76), solange die Regelabweichung (dp(k) größer als ein positiver Schwellwert dpmin ist.

28. Brennkraftmaschine nach Anspruch 27, dadurch gekennzeichnet, daß der Differentialanteil (dtvhd(k)) nur dann neu berechnet wird (76), wenn die Differenz der Regelabweichungen (ddp = dp(k)—ddp(k—1)) größer als ein positiver Schwellwert (ddpmin) ist.

29. Brennkraftmaschine nach Anspruch 28, dadurch gekennzeichnet, daß der Summenwert der Regelung (dtvh), der sich aus der Summe (dtvh = dtvhp + dtvhi + dtvhd) (77) des Proportionalanteils (dtvhp), des Integralanteils (dtvhi) und des Differentialanteils (dtvhd) ergibt, auf einen maximalen Wert (dtvh kleiner oder gleich 100) begrenzt ist.

30. Brennkraftmaschine nach Anspruch 29, dadurch gekennzeichnet, daß der Summenwert (50) aus Vorsteuerung und Regelung (tvhrg) auf die untere Grenze (0) des gemeinsamen Zahlenbereichs gesetzt wird, wenn der Summenwert (50) aus Vorsteuerung und Regelung (tvhrg) unterhalb der unteren Grenze des gemeinsamen Zahlenbereichs (tvhrg < 0) liegt bzw. auf die obere Grenze (= 200) des gemeinsamen Zahlenbereichs gesetzt wird, wenn der Summenwert (50) aus Vorsteuerung und Regelung (tvhrg) oberhalb der oberen Grenze (tvhrg > 200) des Zahlenbereichs liegt (51).

31. Brennkraftmaschine nach Anspruch 30, dadurch gekennzeichnet, daß der Summenwert (50) aus Vorsteuerung und Regelung (tvhrg) einer ersten dynamischen Begrenzung unterworfen ist, welche den Summenwert (50) aus Vorsteuerung und Regelung (thvhrg) auf den Zuschaltpunkt (= 100) festsetzt, solange der Vorsteuerwert (tvhkf) im zweiten Bereich (kleiner oder gleich 100) und die Summe aus Vorsteuerung und Regelung (tvhrg = tvhkf + dtvh) im ersten Bereich (< 100) ist.

32. Brennkraftmaschine nach Anspruch 31, dadurch gekennzeichnet, daß der Summenwert (50) aus Vorsteuerung und Regelung (tvhrg) einer zweiten dynamischen Begrenzung unterworfen ist (51), welche den Summenwert (tvhrg) beim Übergang vom Ein- Lader- Betrieb (tvhrg größer 100) in den Zwei- Lader- Betrieb (tvhrg kleiner oder gleich 100) auf dem Zuschaltpunkt (= 100) festhält, solange noch nicht wenigstens eine der folgenden Bedingungen erfüllt ist :

Die Regeldifferenz (dp) ist kleiner als ein Schwellwert (dpmax),

der Tastverhältnisvorsteuerwert (tvhkf) ist größer als die Summe des Werts am Zuschaltpunkt (= 100) und einem Schwellwert (tvhmin),

es ist eine vorgebbare Zeitspanne (tdyn) abgelaufen.

33. Brennkraftmaschine nach Anspruch 32, dadurch gekennzeichnet, daß bei einem im ersten Bereich liegenden Summenwert aus Vorsteuerung und Regelung (tvhrg > 100) das Steuerventil (24) des Abblaseventils (20) vollständig ausgesteuert und das Steuerventil (23) des Zuschaltventils (19) mit einem Ansteuerwert (erstes Tastverhältnis tzv = tvhrg-100) angesteuert wird, der sich aus der Differenz des Summenwerts (tvhrg) und dem Wert des Zuschaltpunkts (= 100) ergibt und bei einem Summenwert (tvhrg) kleiner oder gleich dem Wert des Zuschaltpunkts (= 100) das Steuerventil (23) des Zuschaltventils (19) nicht und das Steuerventil (24) des Abblaseventils (20) mit einem Ansteuerwert (zweites Tastverhältnis wg = tvhrg) angesteuert wird, der dem Summenwert (tvhrg) entspricht (52).

34. Brennkraftmaschine nach Anspruch 33, dadurch gekennzeichnet, daß das erste Tastverhältnis (tzv) und das zweite Tastverhältnis (wg) auf den Arbeitsbereich der Steuerventile begrenzt wird.

35. Brennkraftmaschine nach Anspruch 34, dadurch gekennzeichnet, daß der Saugrohrdruck (pist) im Sammelsaugrohr (21) stromabwärts der Drosselklappe (22) gemessen wird.

36. Brennkraftmaschine nach Anspruch 35, dadurch gekennzeichnet, daß das Steuergerät (25) auf Mikrorechnerbasis aufgebaut ist.

37. Brennkraftmaschine nach Anspruch 36, dadurch gekennzeichnet, daß die Kennfelder (41, 42, 44, 45, 46, 47) und die Kennlinien (53, 57, 63) an Stützstellen diskretisiert und in nichtflüchtigen Speichern (ROM, PROM, EPROM, o. a.) abgelegt sind und daß Fuktionswerte für abhängige Variable, die zwischen Stützstellen liegen, interpoliert und/oder extrapoliert oder quantisiert werden.

**Claims**

1. Multicylinder internal combustion engine (2) having two exhaust gas turbochargers (12, 15) each comprising a turbine (11, 14) and a compressor (26, 27) driven thereby, the compressors (26, 27) being connected via separate charge pressure lines (29, 30) to a common intake manifold (21), and the turbines (11, 14) being incorporated in separate exhaust gast lines (10, 13) starting from an exhaust manifold (9) and the one exhaust gas turbocharger (15) being connectable to the other exhaust gas turbocharger (12) during operation of the internal combustion engine (2) and a controllable blowoff valve (20) (waste gate) being placed in a bypass line starting from the exhaust manifold (9) and bypassing the turbines (11, 14) of both exhaust gas turbochargers (12, 15) and a controllable connecting valve (19) being placed in the exhaust gas line of the turbine (14) of the connectable exhaust gas turbocharger (15), it being possible after opening of this connecting valve (19) for a return valve (31) placed in the air charge line (29) of the compressor (14) of the connectable exhaust gas turbocharger (15) to be opened by the pressure building up in the air charge line (29), the blowoff valve (20) and the connecting valve (19) being controllable by means of an electronic control device (25) in dependence on state variables (nmot, dkwin, pist, tll) of the internal combustion engine (2) detected by sensors (34, 36, 37, 38), characterized in that the electronic control device (25) has a pre-control module (39), which is common to the blowoff valve (20) and the connecting valve (19) and operates in dependence on the state variables (nmot, dkwin) detected by the sensors (34, 36), and a regulating module (40) operating at least in dependence on the suction tube pressure (pist), the corresponding pre-control and regulation for driving both valves (19, 20) being combined with one another.

2. Internal combustion engine according to Claim 1, characterized in that state variables used for pre-control are the speed of rotation (nmot) and the position (throttle valve angle (dkwin)) of the power control member (throttle valve) (22) of the internal combustion engine (2).

3. Internal combustion engine according to Claim 2, characterized in that regulation takes place by means of a regulator (40) with regulating parameters (rkp, rki, rkd) dependent on the state variables.

4. Internal combustion engine according to Claim 3, characterized in that the regulator (40) has a PID structure.

5. Internal combustion engine according to Claim 4, characterized in that driving (49) of the blowoff valve (20) and the connecting valve (19) is subject to dynamic limits (51).

6. Internal combustion engine according to Claim 5, characterized in that driving of the blowoff valve (20) and the connecting valve (19) undergoes a compensation (48) dependent on the air charge temperature (tll).

7. Internal combustion engine according to Claim 6, having a venting valve arranged in a bypass of the compressor of the connectable turbocharger, the venting valve being controllable by means of the electronic control device in dependence on state variables of the internal combustion engine detected by sensors, characterized in that the venting valve (33) is driven in dependence on state variables such that surging in the connectable exhaust gas turbocharger (15) is prevented, the venting valve (33) being closed if a pair of values (nmot, pist) formed from the speed of rotation (nmot) and the suction tube pressure (pist) moves into a region of a plane, drawn from the speed of rotation (nmot) and the suction tube pressure (pist), of the state space of the state variables of the internal combustion engine (2), this region being limited on the left by an upper limit value (npmax) and an upper characteristic for speed of rotation and suction tube pressure (fpmax (nmot)), and in that the venting valve (33) is opened when the pair of values (nmot, pist) moves into a region of this plane limited on the right by a lower limit value (npmin) and a lower characteristic for speed of rotation and suction tube pressure (fpmin (nmot)).

8. Internal combustion engine according to Claim 7, characterized in that the connecting valve (19) and the blowoff valve (20) are valves actuated by pneumatic additional energy and open in the non-driven state, to which the additional energy is supplied via control valves (pulse valves) (23, 24) which are operated in pulsed manner and closed in the non-driven state and which are driven via the control device (25) by means of a mark-space ratio (tzv, wg).

9. Internal combustion engine according to Claim 8, characterized in that the pneumatic additional energy is taken from the intake manifold (21) upstream of the power control member (throttle valve) (22).

10. Internal combustion engine according to Claim 9, characterized in that the degree of closing of the connecting valve (19) and the degree of closing of the blowoff valve (20) are controllable continuously in the range between 0 % (fully open) and 100 % (fully closed).

11. Internal combustion engine according to Claim 10, characterized in that the first control valve (23) associated with the connecting valve (19) is only operated with a first mark-space ratio (tzv) between 100 % and greater than 0 % (single-charger operation) if the second control valve (24) associated with the blowoff valve (20) is fully off (second mark-space ratio wg = 100) and the second control valve (24) is only operated with a second mark-space ratio (wg) between 100 % and 0 % (two-charger operation) if the first control valve (23) is not driven (first mark-space ratio tzv = 0 %).

12. Internal combustion engine according to Claim 11, characterized in that the first mark-space ratio (tzv) and the second mark-space ratio (wg) are defined by a reference figure (tvh) in a common numerical range (between 200 and 0), the common numerical range being divided into a first range (between 200 and > 100) and a second range (between 100 and 0).

13. Internal combustion engine according to Claim 12, characterized in that the single-charger operation is formed by the first range (200 greater than or equal to (tvh) greater than 100) and the two-charger operation is formed by the second range (100 greater than or equal to (tvh) greater than or equal to 0) of the driving value (tvh), the connecting valve (19) being increasingly opened as the driving valve (tvh) falls in the first range and being fully open in the second range and the blowoff valve (20) being closed in the first range and continuously opened as the driving valve (tvh) falls in the second range.

14. Internal combustion engine according to Claim 13, characterized in that pre-control (39) takes place through a mark-space ratio pre-control characteristic graph (tvhk = f(nmot, dkwin)) (41) which allocates a mark-space ratio characteristic graph value (tvhk) between 200 and 0 to a current pair of values comprising the speed of rotation (nmot) and the throttle valve angle (dkwin).

15. Internal combustion engine according to Claim 14, characterized in that each charge characteristic (dkwin = constant) in the mark-space ratio pre-control characteristic graph (tvhk = f(nmot, dkwin)) (41) has a steep jump in the mark-space characteristic graph value (tvhk) over the speed of rotation (nmot) from single-charger operation (tvh > 100) to two-charger operation (tvh < 100).

16. Internal combustion engine according to Claim 15, characterized in that each characteristic for the speed of rotation (nmot = constant) of the mark-space ratio pre-control characteristic graph (tvhk = f(nmot, dkwin)) (41) has at the lower end of the value range of the throttle valve angle (dkwin) (power control element not driven (throttle valve), in thrust operation) a steep jump in the mark-space ratio characteristic graph value (tvhk) which allows the latter to remain at the maximum valve (tvhk = 200) below a limit value for speed of rotation for switching over to two-charger operation and to remain at the switching point (tvhk = 100) above this limit value for speed of rotation.

17. Internal combustion engine according to Claim 16, characterized in that, when the internal combustion engine (2) is at the switching point (tvh = 100) in quasi-stationary operation, a continuous switching back and forth between single- and two-charger operation is prevented in that the (uncorrected) mark-space ratio pre-control value (tvhkf') is taken from a mark-space ratio hysteresis characteristic graph (tvhh = fhys(nmot, dkwin)) (42) as long as the speed of rotation (nmot) decreases to enter a range between a first limit value (nmax) and a second limit value (nmin) and is otherwise taken from the mark-space ratio pre-control characteristic graph (tvhk = f(nmot, dkwin)) (41).

18. Internal combustion engine according to Claim 17, characterized in that the regulation (40, regulator portion dtvh) is additively combined with the pre-control (39, mark-space ratio pre-control value tvhkf), resulting in a total value of pre-control and regulation (tvhrg = tvhkf + dtvh) (50) comprising the total of mark-space ratio pre-control value (tvhkf) and regulator portion (dtvh), and the regulator portion (dtvh = dtvp + dtvi + dtvd) is determined from the total (77) of the proportional portion (dtvp), the integral portion (dtvi) and the differential portion (dtvd).

19. Internal combustion engine according to Claim 18, characterized in that the regulation (40) is only combined with the pre-control (39) if the speed of rotation (nmot) and the throttle valve angle (dkwin) are simultaneously above threshold values (nreg), (dkwreg) which determine use of the regulation.

20. Internal combustion engine according to Claim 19, characterized in that a set value (psoll) for the regulation is dependent on the state variables and is taken from a boost set value characteristic graph (psoll = fpsoll(nmot, dkwin)) (43).

21. Internal combustion engine according to Claim 20, characterized in that the regulator portion (dtvh) is calculated at fixed time intervals.

22. Internal combustion engine according to Claim 21, characterized in that the proportional portion (dtvhp = dp*rkp) (58) of the PID regulator (40) is calculated by multiplying (65) the regulating deviation (dp = psoll-pist) with the proportional parameter (rkp) dependent on state variables, the proportional parameter (rkp) being determined from the proportional parameter characteristic graph (rkp = frkp(nmot, dkwin)) (45).

23. Internal combustion engine according to Claim 22, characterized in that the integral portion (dtvhi(k) = dtvhi(k—1) + dp(k)*rki(k)) (59) is calculated at the point in time (k) from the total (68) of the integral portion (dtvhi(k—1)) (66) at the point in time (k—1) and the product (67) of the regulation deviation (dp(k)) and the integral parameter dependent on state variables (rki(k)), the integral parameter (rki(k)) being determined from an integral parameter characteristic graph (rki = frki(nmot, dkwin)) (46).

24. Internal combustion engine according to Claim 23, characterized in that calculation of the current value of the integral portion (dtvhi(k)) is suppressed and the current value of the integral portion at the point in time (k) is set to be equal to the value of the value of the integral portion calculated at the point in time (k—1) (dtvhi(k) = dtvhi(k—1)) (69) as long as at least one of the following conditions is fulfilled :

The amount of regulation deviation (|dp|) is greater than a maximum value (dpmax).

The total value calculated at the point in time (k—1) from the pre-control and regulation (tvhrg(k—1)) is at the upper end of the numerical range (= 200) and the regulation deviation (dp(k)) is greater than 0.

The total value calculated at the point in time (k—1) from the pre-control and regulation (tvhrg(k—1)) is 0 and the regulation deviation (dp(k)) is smaller than 0.

The total value calculated at the point in time (k—1) from the pre-control and regulation (tvhrg(k—1)) is at the switching point (= 100) and the regulation deviation (dp(k)) is greater than 0 and the system is in two-charger operation.

25. Internal combustion engine according to Claim 24, characterized in that the amount of the integral portion (|dtvhi(k)|) is limited to a particular value (70).

26. Internal combustion engine according to Claim 25, characterized in that the differential portion (dtvhd(k) = dtvhd(k—1) + rkd(k)*( dp(k)—dp(k—1)))) (59) is calculated at the point in time (k) from the total (74) of the differential portion (dtvhd(k—1)) (75) at the point in time (k—1) and the product (71) of the differential parameter dependent on state variables (rkd(k)) and the difference of the regulation deviations (ddp = dp(k)—dp(k—1)) (72) at points in time (k) and (k—1), the differential parameter (rkd) being determined from a differential parameter characteristic graph (rkd-frkd(nmot, dkwin)) (47).

27. Internal combustion engine according to Claim 26, characterized in that the differential portion (dtvhd(k)) is only unequal to 0 (76) while the regulation deviation (dp(k)) is greater than a positive threshold value dpmin.

28. Internal combustion engine according to Claim 27, characterized in that the differential portion (dtvhd(k)) is only recalculated (76) if the difference in the regulation deviations (ddp = dp(k)—dp(k—1)) is greater than o positive threshold value (ddpmin).

29. Internal combustion engine according to Claim 28, characterized in that the total value of regulation (dtvh), which results from the total (dtvh = dtvhp + dtvhi + dtvhd) (77) of the proportional portion (dtvhp), the integral portion (dtvhi) and the differential portion (dtvhd), is limited to a maximum value (dtvh less than or equal to 100).

30. Internal combustion engine according to Claim 29, characterized in that the total value (50) of pre-control and regulation (tvhrg) is set to the lower limit (0) of the common numerical range if the total value (50) from pre-control and regulation (tvhrg) is below the lower limit of the common numerical range (tvhrg < 0) or is set to the upper limit (= 200) of the common numerical range if the total value (50) from pre-control and regulation (tvhrg) is above the upper limit (tvhrg > 200) of the numerical range (51).

31. Internal combustion engine according to Claim 30, characterized in that the total value (50) from pre-control and regulation (tvhrg) is subject to a first dynamic limit which sets the total value (50) from pre-control and regulation (thvhrg) to the switching point (= 100) while the pre-control value (tvhkf) is in the second range (less than or equal to 100) and the total of pre-control and regulation (tvhrg = tvhkf + dtvh) is in the first range (> 100).

32. Internal combustion engine according to Claim 31, characterized in that the total value (50) from pre-control and regulation (tvhrg) is subject to a second dynamic limit (51) which keeps the total value (tvhrg) on transition from single-charger operation (tvhrg greater than 100) to two-charger operation (tvhrg less than or equal to 100) at the switching point (= 100) while none of the following conditions has yet been fulfilled :

the regulating difference (dp) is smaller than a threshold value (dpmax),

the mark-space ratio pre-control value (tvhkf) is greater than the total of the value at the switching point (= 100) and a threshold value (tvhmin),

a predeterminable time period (tdyn) has elapsed.

33. Internal combustion engine according to Claim 32, characterized in that, at a total value from pre-control and regulation (tvhrg > 100) within the first range, the control valve (24) of the blowoff valve (20) is fully off and the control valve (23) of the connecting valve (19) is driven at a driving value (first mark-space ratio tzv = tvhrg-100) which results from the difference of the total value (tvhrg) and the value of the switching point (= 100) and, when a total value (tvhrg) is less than or equal to the value of the switching point (= 100), the control valve (23) of the connecting valve (19) is not driven and the control valve (24) of the blowoff valve (20) is driven at a driving value (second mark-space ratio wg = tvhrg) which corresponds to the total value (tvhrg) (52).

34. Internal combustion engine according to Claim 33, characterized in that the first mark-space ratio (tzv) and the second mark-space ratio (wg) are limited to the working range of the control valves.

35. Internal combustion engine according to Claim 34, characterized in that the suction tube pressure (pist) is measured in the intake manifold (21) downstream of the throttle valve (22).

36. Internal combustion engine according to Claim 35, characterized in that the control device (25) is based on a microcomputer.

37. Internal combustion engine according to Claim 36, characterized in that the characteristic graphs (41, 42, 44, 45, 46, 47) and the characteristics (53, 57, 63) are made discrete by support points and stored in non-volatile memories (ROM, PROM, EPROM or the like), and in that functional values for dependent variables located between support points are interpolated and/or extrapolated or quantized.

**Revendications**

1. Moteur à combustion interne multicylindre (2) comportant deux turbocompresseurs à gaz d'échappement (12, 15) comprenant chacun une turbine (11, 14) et un compresseur (26, 27) entraîné par celle-ci, dont les compresseurs (26, 27) sont reliés par des conduites de pression d'admission séparées (29, 30) à un collecteur d'admission, tubulaire commun (21) et dont les turbines (11, 14) sont montés dans des conduites de gaz d'échappement séparées (10, 13) partant d'une conduite collectrice de gaz d'échappement (9), l'un des turbocompresseurs à gaz d'échappement (15) pouvant être connectée pendant le fonctionnement du moteur à combustion interne (2) à l'autre turbocompresseur à gaz d'échappement (12) et une soupape de purge (20) (wastegate) étant insérée dans une conduite de dérivation partant de la conduite collectrice de gaz d'échappement (9), évitant les turbines (11, 14) des deux turbocompresseurs à gaz d'échappement (12, 15), tandis qu'est insérée dans la conduite de gaz d'échappement de la turbine (14) du turbocompresseur à gaz d'échappement connectable (15) une soupape de connexion commandée (19) après l'ouverture de laquelle une soupape de retenue (31) insérée dans la conduite d'air d'alimentation (29) du compresseur (14) du turbocompresseur à gaz d'échappement connectable (15) peut s'ouvrir sous l'action de la pression s'établissant dans la conduite d'air d'alimentation (29), la soupape de purge (20) et la soupape de connexion (19) pouvant être commandées au moyen d'un appareil de commande électronique (25) en fonction de grandeurs d'état (nmot, dkwin, pist, t11) du moteur à combustion interne (2), captées par des capteurs (34, 36, 37, 38), caractérisé en ce que l'appareil de commande électronique (25) comporte un module de commande-pilote (39) commun à la soupape de purge (20) et à la soupape de connexion (19), qui fonctionne en fonction des grandeurs d'état (nmot, dkwin) captées par les capteurs (34, 36) et au moins un module de régulation (40) fonctionnant en fonction de la pression de collecteur (pist), la commande pilote correspondante et la régulation pour l'activation des deux soupapes (19, 20) étant superposées.

2. Moteur à combustion interne selon la revendication 1, caractérisé en ce qu'on utilise, comme grandeurs d'état pour la commande pilote, la vitesse de rotation (nmot) et la position (angle de clapet d'étranglement (dkwin)) de l'organe de commande de puissance (clapet d'étranglement) (22) du moteur à combustion interne (2).

3. Moteur à combustion interne selon la revendication 2, caractérisé en ce que la régulation est effectuée au moyen d'un module de régulation (40) avec des paramètres de réglage (rkp, rki, rkd) dépendant des grandeurs d'état.

4. Moteur à combustion interne selon la revendication 3, caractérisé en ce que le module de régulation (40) présente une structure à triple action (PID).

5. Moteur à combustion interne selon la revendication 4, caractérisé en ce que l'activation (49) de la soupape de purge (20) et de la soupape de connexion (19) est soumise à des limitations dynamiques (51).

6. Moteur à combustion interne selon la revendication 5, caractérisé en ce que l'activation de la soupape de purge (20) et de la soupape de connexion (19) subit une correction (48) fonction de la température de l'air d'admission (t11).

7. Moteur à combustion interne selon la revendication 6, comportant une soupape de mise à l'atmosphère placée dans une dérivation aboutissant au compresseur du turbocompresseur connectable, qui peut être commandée au moyen de l'appareil de commande électronique en fonction de grandeurs d'état du moteur à combustion interne captées par des capteurs, caractérisé en ce que la soupape de mise à l'atmosphère (33) est activée en fonction des grandeurs d'état de telle façon qu'un pompage du turbocompresseur à gaz d'échappement connectable (15) est empêché, la soupape de mise à l'atmosphère (33) étant fermée lorsqu'une paire de valeurs (nmot, pist) formée à partir de la vitesse de rotation (nmot) et de la pression (nmot) et de la pression de collecteur (pist) passe dans un domaine du plan de l'espace d'états des grandeurs d'état du moteur à combustion interne (2) déterminé par la vitesse de rotation (nmot) et la pression de collecteur (pist), qui est déterminé vers la gauche par une valeur-limite supérieure (npmax) et par une caractéristique linéaire vitesse de rotation-pression de collecteur (fpmax nmot)), et en ce que la soupape de mise à l'atmosphère (33) s'ouvre lorsque le couple de valeurs (nmot, pist) passe dans un domaine de ce plan qui est délimité vers la droite par une valeur-limite inférieure (npmin) et par une caractéristique linéaire vitesse rotation-pression de collecteur inférieure (fpmin (nmot)).

8. Moteur à combustion interne selon la revendication 7, caractérisé en ce que la soupape de connexion (19) et la soupape de purge (20) sont des soupapes actionnées par énergie pneumatique auxiliaire, ouvertes à l'état non activé, auxquelles l'énergie auxiliaire est transmise par des soupapes de commande (soupapes de rythme) (23, 24) à fonctionnement rythmé, fermées à l'état non activé, qui sont activées par l'intermédiaire de l'appareil de commande (25) au moyen d'un taux d'impulsions (tzv, wg).

9. Moteur à combustion interne selon la revendication 8, caractérisé en ce que l'énergie pneumatique auxiliaire est prévue sur le collecteur tubulaire (21) avant l'organe de commande de puissance (clapet d'étranglement) (22).

10. Moteur à combustion interne selon la revendication 9, caractérisé en ce que le degré de fermeture de la soupape de connexion (19) et le degré de fermeture de la soupape de purge (20) peuvent être réglés en continu dans l'intervalle compris entre 0 % (ouverture complète) et 100 % (fermeture complète).

11. Moteur à combustion interne selon la revendication 10, caractérisé en ce que la première soupape de commande (23) correspondant à la soupape de connexion (19) n'est actionnée avec un premier taux d'impulsions (tzw) compris entre 100 % et plus de 0 % (fonctionnement à simple alimentation) que lorsque la seconde soupape de commande (24) rattachée à la soupape de purge (20) est complètement activée (second taux d'impulsions wg = 100) et la seconde soupape de commande (24) n'est actionnée avec un second taux d'impulsions (wg) compris entre 100 % et 0 % (fonctionnement à double alimentation) que lorsque la première soupape de commande (23) n'est pas activée (premier taux d'impulsions tzw = 0 %).

12. Moteur à combustion interne selon la revendication 11, caractérisé en ce que le premier taux d'impulsions (tzw) et le second taux d'impulsions (wg) sont définis par un nombre de référence (tvh) situé dans un intervalle numérique commun (compris entre 200 et 0), l'intervalle numérique commun se subdivisant en un premier intervalle (compris entre 200 et plus de 100) et un second intervalle (compris entre 100 et 0).

13. Moteur à combustion interne selon la revendication 12, caractérisé en ce que le fonctionnement à simple alimentation est formé par le premier intervalle (200 supérieur ou égal à (tvh) supérieur à 100) et le fonctionnement à double alimentation par le second intervalle (100 supérieur ou égal à (tvh) supérieur ou égal à 0) de la valeur d'activation (tvh), la soupape de connexion (19) s'ouvrant de plus en plus dans le premier intervalle lorsque la valeur d'activation (tvh) diminue et étant complètement ouverte dans le second intervalle et la soupape de purge (20) étant fermée dans le premier intervalle et s'ouvrant de plus en plus lorsque la valeur d'activation (tvh) diminue dans le second intervalle.

14. Moteur à combustion interne selon la revendication 13, caractérisé en ce que la commande pilote (39) est effectuée au moyen d'un tableau caractéristique de valeur de commande-pilote de taux d'impulsions (tvhk = f(nmot, dwkin) (41) qui fait correspondre à une paire actuelle comprenant la vitesse de rotation (nmot) et l'angle de clapet d'étranglement (dkwin) une valeur caractéristique de taux d'impulsions (tvhk) comprise entre 200 et 0.

15. Moteur à combustion interne selon la revendication 14, caractérisé en ce que chaque caractéristique linéaire de charge (dkwin = constante) du tableau caractéristique de valeurs de commande-pilote de taux d'impulsions (tvhk = f(nmot, dkwin) (41) présente un saut brusque de valeur caractéristique de taux d'impulsions (tvhk) au-dessus de la vitesse de rotation (nmot) du fonctionnement à simple alimentation (tvh supérieur à 100) au fonctionnement à double alimentation (tvh inférieur à 100).

16. Moteur à combustion interne selon la revendication 15, caractérisé en ce que chaque caractéristique linéaire de vitesse de rotation (nmot = constante) du tableau caractéristique de valeurs de commande-pilote taux d'impulsions (tvhk = f(nmot, dwkin) (41) présente à l'extrémité inférieure de l'intervalle des valeurs de l'angle de clapet d'étranglement (dkwin) (organe de réglage de puissance non activé (clapet d'étranglement), conditions de fonctionnement normales) un saut brusque de valeur caractéristique de taux d'impulsions (tvhk) qui la fait demeurer au-dessous d'une valeur-limite de vitesse de rotation pour le passage au fonctionnement à double alimentation à la valeur maximale (tvhk = 200) et au-dessus de cette valeur-limite de vitesse de rotation au point de connexion (tvhk = 100).

17. Moteur à combustion interne selon la revendication 16, caractérisé en ce que, pour un fonctionnement quasi-stationnaire du moteur à combustion interne (2) au point de connexion (tvh = 100), on évite un aller-et-retour constant entre le fonctionnement à simple alimentation et à double alimentation en prélevant la valeur taux d'impulsions-précommande (non corrigée) (tvhkf') sur un tableau caractéristique de valeur d'hystérésis de taux d'impulsions tvh = f hys (nmot, dkwin) (42), dans la mesure où la vitesse de rotation (nmot) passe, en diminuant, dans un intervalle compris entre une première valeur-limite (nmax) et une seconde valeur-limite (nmin), cette valeur provenant sinon du tableau caractéristique de valeurs de commande-pilote de taux d'impulsions (tvhk = f (nmot, dwkin)) (41).

18. Moteur à combustion interne selon la revendication 17, caractérisé en ce que le module de régulation (40, composante de régulation dtvh) se superpose à la commande-pilote (39, valeur de commande-pilote de taux d'impulsions tvhkf) de façon additive, une valeur-somme étant déterminée à partir de la commande pilote et de la régulation (tvhrg = tvhkf + dtvh) (50) à partir de la somme de la valeur de commande pilote de taux d'impulsions (tvhkf) et de la composante de régulation (dtvh) et la composante de régulateur (dtvh = dtvp + dtvi + dtvd) à partir de la somme (77) de la composante proportionnelle (dtvp), de la composante intégrale (dtvi) et de la composante différentielle (dtvd).

19. Moteur à combustion interne selon la revendication 18, caractérisé en ce que la régulation (40 ne se superpose à la commande-pilote (39) que dans la mesure où la vitesse de rotation (nmot) et l'angle de clapet d'étranglement (dkwin) sont en même temps au-dessus des valeurs de seuil (nreg), dkwreg) déterminantes pour la mise en jeu de la régulation.

20. Moteur à combustion interne selon la revendication 19, caractérisé en ce qu'une valeur prescrite (psoll) pour la régulation est fonction de grandeur d'état et est prélevée sur un tableau caractéristique de valeur prescrite de pression d'admission (psoll = fpsoll (nmot, dkwin)) (43).

21. Moteur à combustion interne selon la revendication 20, caractérisé en ce que la composante de régulateur (dtvh) est calculée à intervalles de temps fixes.

22. Moteur à combustion interne selon la revendication 21, caractérisé en ce que la composante proportionnelle (dtvhp = dp*rkp) (58) du régulateur PID (40) est déterminée par multiplication (65) de l'écart de réglage (dp = psoll — pist) avec le paramètre proportionnel (rkp) fonction des grandeurs d'état, le paramètre proportionnel (rkp) étant déterminé à partir d'un tableau caractéristique de paramètre proportionnel (rkp = frkp (nmot, dkwin)) (45).

23. Moteur à combustion interne selon la revendication 22, caractérisé en ce que la composante intégrale (dtvhi(k) = dtvhi (k — 1) + dp(k)*rki(k))(59) à l'instant (k) est calculée à partir de la somme (68) de la composante intégrale (dtvhi (k — 1)) (66) à l'instant (k — 1) et du produit (67) de l'écart de réglage (dp(k)) par le paramètre intégral dépendant des grandeurs d'état (rki(k)), le paramètre intégral (rki(k) étant déterminé à partir d'un tableau caractéristique de paramètre intégral (rki = frki (nmot, dwkin)) (46).

24. Moteur à combustion interne selon la revendication 23, caractérisé en ce que le calcul de la valeur actuelle de la composante intégrale (dtvhi) (k)) est inhibé et la valeur actuelle de la composante intégrale à l'instant (k) est égalisée avec la valeur de la composante intégrale calculée à l'instant (k — 1) (dtvhi (k) = dtvhi (k — 1) (69), dans la mesure où l'une au moins des conditions suivantes est remplie :

— la valeur absolue de l'écart de réglage (dp) est supérieure à une valeur maximale (dpmax) ;

— la somme, calculée à l'instant (k — 1), de la commande pilote et de la régulation (tvhrg (k — 1) est à l'extrémité supérieure de l'intervalle numérique (= 200) et à l'écart de réglage (dp(k)) est supérieur à 0 ;

— la somme, calculée à l'instant (k — 1) de la commande pilote et de la régulation (tvhrg (k — 1) est nulle et l'écart de réglage (dp(k) est inférieur à 0 ;

— la somme, calculée à l'instant (k — 1), de la commande-pilote et de la régulation (tvhrg (k — 1)) est au point de connexion (= 100) et l'écart de réglage (dp(k)) est supérieur à 100, et le système est en fonctionnement à double alimentation.

25. Moteur à combustion interne selon la revendication 24, caractérisé en ce que la valeur absolue de la composante intégrale (dtvhi (k)) est limitée à une valeur déterminée, (70).

26. Moteur à combustion interne selon la revendication 25, caractérisé en ce que la composante différentielle (dtvhd(k) = dtvhd(k — 1) + rkd(k) *(dp(k) — dp(k — 1)))) (59) à l'instant (k) est calculée à partir de la somme (74) de la composante différentielle (dtvhd(k — 1)) (75) à l'instant (k — 1) et du produit (71) du paramètre différentiel fonction de grandeurs d'état (rkd(k)) et de la différence des écarts de réglage (ddp = dp(k) dp(k — 1)) (72) aux instants (k) et (k — 1), le paramètre (rkd) étant déterminé à partir d'un tableau caractéristique de paramètre différentiel (rkd = frkd(nmot, dkwin)) (47).

27. Moteur à combustion interne selon la revendication 26, caractérisé en ce que la composante différentielle (dtvhd(k)) n'est différente de 0 (76) que tant que l'écart de réglage (dp(k)) est supérieur à une valeur de seuil positive dpmin.

28. Moteur à combustion interne selon la revendication 27, caractérisé en ce que la composante différentielle (dtvhd(k)) n'est recalculée (76) que lorsque la différence des écarts de réglage (ddp = dp(k) — dp(k — 1)) est supérieur à une valeur de seuil positive (ddpmin).

29. Moteur à combustion interne selon la revendication 28, caractérisé en ce que la somme de la régulation (dtvh), qui résulte de la somme (dtvh = dtvhp + dtvhi + dtvhd) (77) de la composante proportionnelle (dtvhp), de la composante intégrale (dtvhi) et de la composante différentielle (dtvhd) est limitée à une valeur maximale (dtvh inférieure ou égale à 100).

30. Moteur à combustion interne selon la revendication 29, caractérisé en ce que la somme (50) de la commande pilote et de la régulation (tvhrg) est mise à la limite inférieure (0) de l'intervalle numérique commun lorsque la somme (50) de la commande pilote et de la régulation (tvhrg) est inférieure à la limite inférieure de l'intervalle numérique commun (tvhrg inférieur à 0) ou est mise à la limite supérieure (= 200) de l'intervalle numérique commun lorsque la somme (50) de la commande pilote et de la régulation (tvhrg) est supérieure à la limite supérieure (tvhrg supérieure à 200) de l'intervalle numérique (51).

31. Moteur à combustion interne selon la revendication 30, caractérisé en ce que la somme (50) de la commande pilote et de la régulation (tvhrg est soumise à une première limitation dynamique qui fixe la somme (50) de la commande pilote et de la régulation (thvhrg) au point de connexion (= 100), tant que la valeur de commande pilote (tvhkf) est dans le second intervalle (inférieur ou égal à 100) et la somme de la commande pilote et de la régulation (tvhrg = tvhkf + dtvh) dans le premier intervalle (supérieur à 100).

32. Moteur à combustion interne selon la revendication 31, caractérisé en ce que la somme (50) de la commande pilote et de la régulation (tvhrg) est soumise à une seconde limitation dynamique (51) qui maitient la somme (tvhrg) lors du passage du fonctionnement à simple alimentation (tvhrg supérieur à 100) au point de connexion (= 100), tant que l'une au moins des conditions suivantes n'est pas encore remplie :
— la différence de réglage (dp) est inférieure à une valeur de seuil (dpmax) ;
— la valeur de commande pilote de taux d'impulsion (tvhkf) est supérieure à la somme de la valeur au point de connexion (= 100) et à une valeur de seuil (tvhmin) ;
— un intervalle de temps prédéterminable (tdyn) s'est écoulé.

33. Moteur à combustion interne selon la revendication 32, caractérisé en ce que, lorsque la somme de la commande pilote et de la régulation se trouve dans le premier intervalle (tvhrg supérieur à 100), la soupape de commande (24) de la soupape de purge (20) est complètement activée et la soupape de commande (23) de la soupape de connexion (19) est activée avec une valeur d'activation (premier taux d'impulsions tzv = tvhrg — 100) qui résulte de la différence de la somme (tvhrg) et de la valeur du point de connexion (= 100) et, lorsque la somme (tvhrg) est inférieure ou égale à la valeur du point de connexion (= 100), la soupape de commande (23) de la soupape de connexion (19) n'est pas activée et la soupape de commande (24) de la soupape de purge (20) est activée avec une valeur d'activation (second taux d'impulsions wg = tvhrg) qui correspond à la somme (tvhrg) (52).

34. Moteur à combustion interne selon la revendication 33, caractérisé en ce que le premier taux d'impulsions (tzw) et le second taux d'impulsions (wg) sont limités au domaine de fonctionnement des soupapes de commande.

35. Moteur à combustion interne selon la revendication 34, caractérisé en ce que la pression de collecteur (pist) dans le collecteur d'admission tubulaire (21) est mesurée en aval du clapet d'étranglement (22).

36. Moteur à combustion interne selon la revendication 35, caractérisé en ce que l'appareil de commande (25) a une structure à base de micro-informatique.

37. Moteur à combustion interne selon la revendication 36, caractérisé en ce que les tableaux caractéristiques (41, 42, 43, 44, 45, 46, 47) et les caractéristiques linéaires (53, 57, 63) sont rendues discrètes en des points d'échantillonnage et les valeurs discrètes obtenues placées dans des mémoires non volatiles (ROM, PROM, EPROM, etc.) et en ce que les valeurs de fonction pour des variables dépendantes comprises entre des points d'échantillonnage sont interpolées et/ou extrapolées ou quantifiées.

FIG.1

EP 0 253 075 B1

EP 0 253 075 B1

FIG.2

2

**FIG.3**

| tvh | Zuschaltventil | Abblaseventil | Betriebsart |
|---|---|---|---|
| 200 | zu | zu | Ein-Lader-Betrieb |
| 199 ⋮ 101 | getaktet mit tvh - 100 | zu | |
| 100 | auf | zu | Zwei-Lader-Betrieb |
| 99 ⋮ 1 | auf | getaktet mit tvh | |
| 0 | auf | auf | |

**FIG.4**

tvhk = f (nmot, dkwin)

| | | dkwin/(°) → | | | | | |
|---|---|---|---|---|---|---|---|
| | | 3 | 4 | 25 | 45 | 60 | 80 |
| nmot/ (U/m) ↓ | 2000 | 200 | 100 | 100 | 120 | 160 | 200 |
| | 3000 | 200 | 100 | 130 | 140 | 165 | 180 |
| | 3300 | 200 | 100 | 115 | 145 | 160 | 180 |
| | 3680 | 200 | 100 | 120 | 140 | 155 | 180 |
| | 4000 | 200 | 100 | 110 | 130 | 150 | 175 |
| | 4280 | 100 | 0 | 30 | 40 | 50 | 55 |
| | 5000 | 100 | 0 | 0 | 10 | 30 | 40 |
| | 6000 | 100 | 0 | 0 | 10 | 25 | 35 |
| | 7000 | 100 | 0 | 0 | 0 | 20 | 30 |
| | 8000 | 100 | 0 | 0 | 0 | 0 | 0 |

**FIG.5**

tvhh = fh (nmot, dkwin)

| | | dkwin/(°) → | | | | | |
|---|---|---|---|---|---|---|---|
| | | 3 | 4 | 25 | 45 | 65 | 78.1 |
| nmot/ (U/m) ↓ | 3300 | 200 | 100 | 120 | 145 | 160 | 180 |
| | 3680 | 200 | 100 | 120 | 140 | 155 | 180 |
| | 4000 | 100 | 0 | 30 | 40 | 55 | 55 |
| | 4280 | 100 | 0 | 30 | 40 | 50 | 55 |

FIG.6

100 —

nmin  nmax

FIG.7  tvhkf"=ftkf(tll)

| tll / (°C) | tvhkh" |
|---|---|
| 10 | 0 |
| 30 | 0 |
| 60 | 0 |
| 85 | 18 |

FIG.8
psoll=fpsoll
(nmot,dkwin)

| nmot/ (U/m) | dkwin/(°) |||| 
|---|---|---|---|---|
|  | 25 | 45 | 65 | 80 |
| 2000 | 1350 | 1400 | 1800 | 2000 |
| 3000 | 1450 | 1700 | 1900 | 2100 |
| 3300 | 1350 | 1600 | 1850 | 2100 |
| 3680 | 1350 | 1600 | 1700 | 2000 |
| 4000 | 1350 | 1650 | 1800 | 2000 |
| 4280 | 1300 | 1600 | 1800 | 2000 |
| 5000 | 1200 | 1500 | 1800 | 1900 |
| 6000 | 1000 | 1450 | 1750 | 1800 |
| 7000 | 1000 | 1450 | 1750 | 1800 |
| 8000 | 1000 | 1400 | 1500 | 1700 |

FIG.9  psoll"=ftdp
(tll)

| tll /(°C) | dp" |
|---|---|
| 10 | 1,0 |
| 30 | 1,0 |
| 60 | 1,0 |
| 85 | 0,92 |

dkwin

FIG.10

I

II

nmot

4

FIG.11

rkp=frkp(nmot, dkwin)

| | dkwin/(°) → | | | |
|---|---|---|---|---|
| nmot/(U/m) | 30 | 45 | 65 | 80 |
| 2000 | 175 | 165 | 140 | 135 |
| 4000 | 185 | 165 | 150 | 120 |
| 6000 | 185 | 165 | 145 | 120 |
| 7000 | 170 | 165 | 140 | 90 |

FIG.12

rki= frki(nmot, dkwin)

| | dkwin/(°) → | | | |
|---|---|---|---|---|
| nmot/(U/m) | 30 | 45 | 65 | 80 |
| 2000 | 22 | 17 | 15 | 20 |
| 5000 | 22 | 20 | 10 | 19 |
| 6000 | 20 | 17 | 14 | 16 |
| 7000 | 27 | 20 | 17 | 5 |

FIG.13

rkd=frkd(nmot, dkwin)

| | dkwin/(°) → | | | |
|---|---|---|---|---|
| nmot/(U/m) | 35 | 40 | 60 | 80 |
| 2000 | 100 | 128 | 128 | 128 |
| 4500 | 100 | 128 | 128 | 128 |
| 6500 | 100 | 128 | 128 | 128 |
| 7500 | 100 | 128 | 128 | 128 |

FIG.14

FIG.15

tvhkf'

FIG.16

FIG.17

91

dp > dpmin ?

nein

ja

93

ddp= dp(k)-dp(k-1)

94

ddp > ddpmin

nein

ja

95

dtvhd(k)=dtvhd(k-1)+ddp·rkd

96

dtvhd(k)=dtvhd(k-1)

92

dtvhd = 0

dtvhd

tvhrg

FIG.18

97

tvhrg > 100 ?

ja

nein

101

Abblaseventil zu

98

Zuschaltventil auf

102

tvh = tvhrg - 100

99

tvh = tvhrg

103

Begrenzung

100

Begrenzung

tzv

wg

7

# FIG.19

```
┌──────────────┐
│    Start     │──── 104
└──────┬───────┘
       │
┌──────┴───────┐
│ Initialisierung │──── 105
└──────┬───────┘
       │
      (A)──── 106
       │
┌──────┴───────┐
│  Umrechnung  │──── 107
│ der Meßdaten │
└──────┬───────┘
       │
┌──────┴──────────────────────┐
│ Bestimmung (Interpolation)   │──── 108
│ der Werte tvhkf; tvhkf,"psoll;'│
│ psoll" rkp, rki, rkd  aus den │
│ Kennfeldern 41,42,57,63, 44-47│
└──────┬──────────────────────┘
       │
┌──────┴──────────────────────┐
│ Ansteuerung  des            │──── 109
│ Entlüftungsventils          │
└─────────────────────────────┘
```

# FIG. 20

```
  ┌···
  └···──────── 110    ⚡
                      │
            ┌─────────┴────────┐
            │ Bestimmung der   │──── 111
            │ Regelungsanteile │
            │ dtvhp,dtvhi,dtvhd│
            └────────┬─────────┘
                     │
            ┌────────┴─────────┐
            │ dynamische+statische │──── 112
            │ Begrenzungen     │
            └────────┬─────────┘
                     │
            ┌────────┴─────────┐
            │    Rundung       │──── 113
            └────────┬─────────┘
                     │
            ┌────────┴─────────┐
            │ Ansteuerung der  │──── 114
            │ Steuerventile mit│
            │    wg , tzv      │
            └────────┬─────────┘
                     │
  ┌···───────────────┘
  └··· 115
```

# FIG.21

```
  ┌···
  └···── 116      ⚡
                  │
        ┌─────────┴──────────┐
        │ Meßdatenerfassung  │──── 117
        │ für nmot,pist,dkwin,tans│
        └─────────┬──────────┘
                  │
  ┌···────────────┘
  └··· 118
```